# EUROPEAN PATENT SPECIFICATION

(11) **EP 3 020 242 B1**
(45) Date of publication and mention of the grant of the patent: **05.09.2018**
(21) Application number: 14823354.7
(22) Date of filing: 07.07.2014
(51) Int. Cl.: H04W 72/12, H04W 52/02

(54) **TECHNIQUES FOR OPTIMIZING PROPAGATION OF MULTIPLE TYPES OF DATA**
VERFAHREN ZUR OPTIMIERUNG DER WEITERLEITUNG MEHRERER ARTEN VON DATEN
TECHNIQUES PERMETTANT D'OPTIMISER LA PROPAGATION DE PLUSIEURS TYPES DE DONNÉES

(30) Priority: 08.07.2013 US 201313937085
(43) Date of publication of application: 18.05.2016
(73) Proprietor: Amazon Technologies, Inc., Reno, NV 89507 (US)
(72) Inventor: EDARA, Kiran K., Seattle, WA 98109-5210 (US); RAO, Noolu R., Seattle, WA 98109-5210 (US)
(74) Representative: D Young & Co LLP
(86) International application number: PCT/US2014/045620
(87) International publication number: WO 2015/006241

(56) References cited:
- US-A1- 2007 286 222
- US-A1- 2009 161 620
- US-A1- 2009 181 683
- US-A1- 2011 294 485
- US-A1- 2012 083 264

## Description

### BACKGROUND

US 2009/161620 discloses a system and method for providing an efficient uplink resource utilization wireless communication system.

Many portable computing devices, such as laptop computers, tablets, smartphones, or head-mounted displays and other wearable computing devices (e.g., eyeglasses, visors, gloves, watches, wristbands, etc.), include mobile broadband cards or chipsets that support third generation (3G) (e.g., Universal Mobile Telecommunications (UMTS), CDMA2000), 3G+ (e.g., Long Term Evolution (LTE), Worldwide Interoperability for Microwave Access WiMAX or IEEE 802.16e), or fourth generation (4G) (e.g., LTE Advanced, Mobile WiMax Release 2 or IEEE 802.16m) wireless telecommunication standards. An important feature for many users with devices capable of supporting such standards is the ability to simultaneously operate the device to make a telephone call and access remote data. For example, two users may be collaborating via a web-based whiteboard or a cloud-based word processing document and thus require the ability to both talk to the other user and access the Internet at the same time. As another example, a user may be participating in a teleconference and desires to send an email during the teleconference. As yet another example, a user may be placed on hold by a customer service agent for a lengthy period of time and would like to pass the time by browsing the internet or playing a web-based video game. Although certain conventional devices and approaches enable users to "talk and surf" at the same time, these conventional systems and methods may provide a less than optimal experience for the user.

### BRIEF DESCRIPTION OF THE DRAWINGS

Various embodiments in accordance with the present disclosure will be described with reference to the drawings, in which:
FIG. 1 illustrates an environment in which various embodiments can be implemented;
FIGS. **2A-2B** illustrate examples of protocol stacks in which various embodiments can be implemented;
FIGS. **3A-3B** illustrate examples of mappings of physical channels to logical channels in which various embodiments can be implemented;
**FIGS. 4A-4C** illustrate example approaches for receiving data from a network to a user device in accordance with various embodiments;
**FIG. 5A-5B** illustrate example approaches for transmitting data from a user device to a network in accordance with various embodiments;
**FIGS. 6A-6D** illustrate examples of receiving data from a network to a user device and transmitting data from the user device to the network in accordance with various embodiments;
**FIG. 7** illustrates an example process for transmitting data from a user device to a network in accordance with an embodiment with various embodiments; and
**FIG. 8** illustrates an example configuration of components of a user device.

### DETAILED DESCRIPTION

In wireless data communication, the transceiver of the computing device uses significant amounts of power for radio frequency (RF) transceiving, analog-to-digital and digital-to-analog conversion, wideband signal processing, among other functions. As mobile networks are expected to support higher data rates and bandwidths, and consumers increasingly demand smaller, lighter computing devices (and concomitantly, smaller, lighter batteries), power saving is becoming more and more critical for such devices. A conventional power saving approach is discontinuous reception (DRX) and/or discontinuous transmission (DTX). DRX/DTX aims to reduce power usage by turning off the transceiver (or a transmitter and receiver in certain embodiments) used for wireless communication for as long as possible, and turning on the transceiver for short periods of time to receive and/or transmit data. The benefits of DRX/DTX may not be realized, however, when a device is used to send data of disparate profiles, such as voice data generally comprising of small packets requiring a persistent network connection and being intolerant to delay or web browsing traffic which may comprise of much larger packets but does not require a persistent network connection.

Systems and methods in accordance with various embodiments of the present disclosure may overcome one or more of the aforementioned and other deficiencies experienced in conventional approaches for concurrently transmitting data of distinct profiles, such as voice data and web traffic data or file transfer data. In various embodiments, a computing device can simultaneously transmit packets of a first type of data, such as voice data associated with a Voice over IP (VoIP) or Voice over LTE (VoLTE) telephone call and packets of a second type of data, such as web browsing traffic or file download, while optimizing the battery life of the computing device. In some embodiments, certain metrics can be determined for the computing device (by the computing device or the network to which the device is connected) to estimate how much of the second type of data (*e.g.,* non-voice data) on top of the first type of data (*e.g.,* voice data) is to be transmitted over the network. These metrics can include a type of data of the second type of data, a quality of service (QoS) corresponding to the second type of data, a data throttling rate, radio access conditions of the computing device, and other such factors. Based on these metrics, transmission of the second type of data can be aligned with transmission of the first type of data such that the RF modem, transceiver, transmitter, receiver, analog-to-digital (ADC) converter, digital-to-analog (DAC) converter, or other such components of the computing device can be turned off while the device is not transceiving data.

Various other functions and advantages are described and suggested below in accordance with the various embodiments.

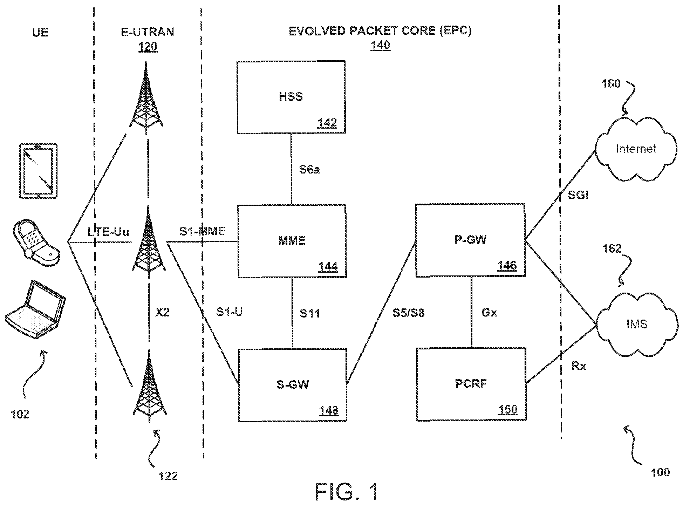

**FIG. 1** illustrates an example of a packet switched network that can be used in accordance with various embodiments. In particular, **FIG. 1** illustrates components of the Third Generation Partnership Project (3GPP) Evolved Packet System (EPS) **100.** Although the EPS is discussed in this example, it will be appreciated that the teachings and suggestions contained herein are equally applicable to other mobile telecommunication systems, such as WiMax or variations thereof. As mentioned, LTE is based on an all Internet Protocol (IP) packet switched network. LTE has evolved from Universal Mobile Telecommunications System (UTMS) radio access through the Evolved UMTS Terrestrial Radio Access network (E-UTRAN) **120.** LTE is complemented by the development of non-radio aspects under the System Architecture Evolution (SAE), which includes the Evolved Packet Core (EPC) network **140.** LTE and SAE make up EPS **100.** At a high level, EPS provides users with IP connectivity to a PDN for accessing the Internet **160** and services such as VoIP provided by the IP Multimedia Subsystem (IMS) **162.** In EPS, "EPS bearers" route IP traffic from a gateway in the PDN **146** to the UE **102.** An "EPS bearer" is an IP packet flow with a defined quality of service (QoS) between the gateway **146** and the UE **102.** Multiple bearers can be established for a user to provide different QoS streams or connectivity to different PDNs. For example, a user may simultaneously be conversing with another user via VoIP and browsing the web or downloading a video. A VoIP bearer could provide the necessary QoS for the VoIP call, while a best-effort bearer could provide the appropriate QoS for the web browsing or video download. This can be achieved by various elements of EPS **100.**

On the EPC network **140** side of EPS, the core network includes components such as the Mobility Management Entity (MME) **144,** the Serving Gateway (S-GW) **148,** and the PDN Gateway (P-GW) **146.** The MME **144** is a control element that processes the signaling between the UE **102** and the EPC network **140.** The MME is responsible for bearer and connection management. The S-GW **148,** through which all user IP packets are transferred, serves as the local mobility anchor for the data bearers when the UE **102** moves between eNodeBs **122.** The S-GW **148** also stores information about the bearers when the UE **102** is in an idle state, and temporarily buffers downlink data while the MME **144** initiates paging of the UE **102** to reestablish the bearers. Further, the S-GW **148** performs certain administrative tasks in the network, such as collecting information for charging and lawful interception. The P-GW **146** is responsible for IP address allocation for the UE **102,** as well as QoS enforcement for guaranteed bit rate (GBR) bearers. The P-GW also provides for filtering of downlink user IP packets into the different QoS-based bearers via Traffic flow Templates (TFTs). The TFTs use IP header information such as source and destination IP addresses and Transmission Control Protocol (TCP) port numbers to filter packets, such as VoIP from web-browsing traffic, such that data flows to their respective bearers with the appropriate QoS. An Uplink TFT (UL TFT) associated with each bearer in the UE filters IP packets to EPS bearers in the uplink direction, and a downlink TFT (DL TFT) in the P-GW uses a similar set of downlink packet filters. As part of the procedure of a UE attaching to the network, the UE is assigned an IP address by the P-GW and at least one bearer (referred to as the default bearer, a non-GBR bearer) is established throughout the lifetime of the PDN connection to provide the UE with always-on IP connectivity to that PDN. Additional bearers (referred to as dedicated bearers) can also be established at any time during or after completion of the attachment procedure, and can be either a GBR or a non-GBR bearer.

In some embodiments, the EPC network **140** can also include components such as the Home Subscriber Server (HSS) **142** and the Policy Control and Charging Rules Function (PCRF) **150.** The HSS **142** stores users' SAE subscription data, such as the EPS-subscribed QoS profile and roaming access restrictions. The HSS can also store information about the PDNs to which the user can connect (e.g., access point names (APNs), PDN addresses). Further, the HSS can store dynamic information such as the identity of the MME to which a user is currently attached or registered. In some embodiments, the HSS may also integrate the authentication center (AUC), which generates authentication and security data. The PCRF **150** is responsible for policy control and controlling the flow-based charging functionalities in the Policy Control Enforcement Function (PCEF) (not shown), which resides in the P-GW **146.** The PCRF provides QoS authorization that determines how a certain data flow will be treated in the PCEF and ensures that the flow comports with the user's subscription profile.

On the E-UTRAN **120** side of EPS **100,** the access network comprises of base stations or evolved NodeBs (eNodeBs) **122,** which are connected to UEs **102,** such as personal computers, smart phones, tablets, and wearable computing devices, among others. The eNodeBs **122** are interconnected through the X2 interface. The eNodeBs connect to the EPC network **140** via the S1 interface. More specifically, the eNodeBs **122** connect to the MME **144** via the S1-MME interface, and to the S-GW **148** via the S1-U interface. The E-UTRAN **120** is responsible for radio access functions, including radio resource management (RRM), header compression, security, and connection to the EPC network **140.** These functions are performed by the eNodeBs, each of which can be responsible for managing multiple cells. Under LTE, radio control is integrated into the eNodeB and can allow for closely integrated interaction between the different protocol layers of the radio access network. This can reduce latency and improve efficiency. Further, such distributed control can eliminate the need for a high-availability, processor-intensive controller for reduction in costs and single-point-failures

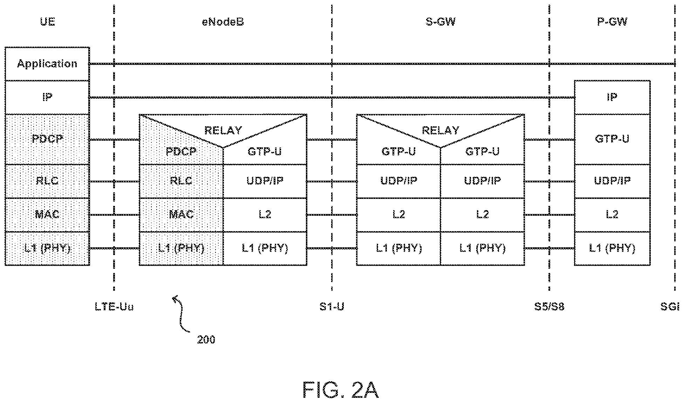

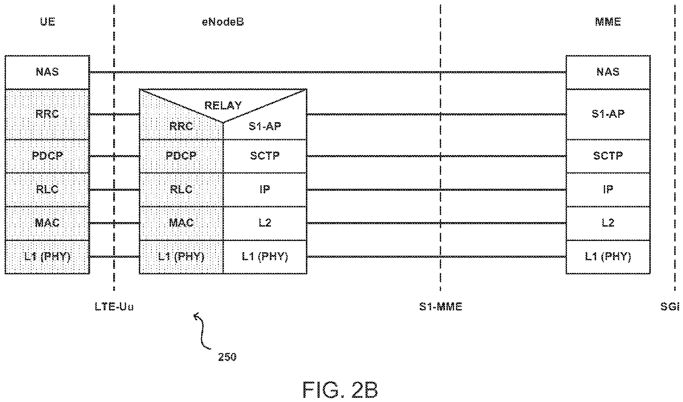

The radio access protocol architecture for LTE can be separated into a user plane protocol stack **200,** as shown in **FIG. 2A****,** and a control plane protocol stack **250** as shown in **FIG. 2B****.** **FIG. 2A** illustrates the user plane protocol stack **200,** shaded in gray herein, which includes sub-layers comprising the Packet Data Convergence Protocol (PDCP), Radio Link Control (RLC), Medium Access Control (MAC), and the L1 or physical (PHY) layer that are terminated in the eNodeB on the network side. At a high level, packets in the EPC network are encapsulated according to a specified EPC protocol and tunneled between the P-GW and the eNodeB for transmission to the UE. Different tunneling protocols are used depending on the interface. For example, the GPRS Tunneling Protocol (GTP) is used on the S1-U interface between the eNodeBs and S-GW and on the S5/S8 interface between the S-GW and P-GW.

The LTE L1 or PHY layer operates according to asymmetrical modulation and data rates for uplink and downlink. On downlink, Orthogonal Frequency Division Multiple Access (OFDMA) is used, and on uplink, Single Carrier - Frequency Division Multiple Access (SC-FDMA) (also known as Discrete Fourier Transform (DFT) spread OFDMA) is used. OFDMA is a multicarrier approach that subdivides the available bandwidth in a plurality of mutual orthogonal narrowband subcarriers. In OFDMA, these subcarriers can be shared between multiple users. Radio access is optimized for performance on the downlink because the eNodeB is assumed to have no power limitations. On the uplink, radio access is optimized more for power consumption than efficiency because of the relatively short battery life of portable computing devices. The LTE PHY layer is full duplex in operation in paired spectrum, with simultaneous transmission and reception. In various embodiments, the PHY layer operates continuously for downlink with interspersed sync and provides multiple channels simultaneously with varying modulation. Data can be represented as a resource block, which comprises a block of 12 subcarriers in one slot. A transport block is a group of resource blocks with a common modulation/coding. The physical interface can use transport blocks that correspond to the data carried over a period of time for allocation to a particular UE. Each radio subframe is 1 ms long, and each frame is 10 ms in length. Multiple UEs can be serviced on the downlink at any particular time in one transport block, and the MAC controls what to send at a given time. The LTE standard specifies these physical channels: the Physical Broadcast Channel (PBCH), the Physical Control Format Indicator Channel (PCFICH), the Physical Downlink Control Channel (PDCCH), the Enhanced Physical Downlink Control Channel (EPDCCH), the Physical Hybrid ARQ Indicator Channel (PHICH), the Physical Downlink Shared Channel (PDSCH), the Physical Multicast Channel (PMCH), the Physical Uplink Control Channel (PUCCH), the Physical Uplink Shared Channel (PUSCH), and the Physical Random Access Channel (PRACH). The modulation schemes supported in the downlink and uplink are QPSK, 16QAM, and 64QAM. In PBCH, the coded BCH transport block is mapped to four subframes within a 40 ms interval. The 40 ms interval is blindly detected (i.e., there is no explicit signal indicating each interval). Each subframe is assumed to be self-decodable (i.e., the BCH can be decoded from a single reception). The PCFICH provides the UE with the number of OFDM symbols used for the PDCCH, and is transmitted in every subframe. The PDDCH signals the UE regarding the resource allocation of the PCH and DL-SCH, and HARQ data corresponding to the DL-SCH. The PDCCH also carries the uplink scheduling grant. The EPDCCH carries scheduling assignments. The PHICH carries HARQ ACK/NAKs in response to uplink transmissions. The PDSCH carries the DL-SCH and PCH. The PMCH carries the MCH. The PUCCH carries HARQ ACK/NAKs in response to downlink transmissions, scheduling requests (SRs), and Channel Quality Information (CQI) reports. The PUSCH carries the UL-SCH. The PRACH carries the random access preamble.

The MAC layer provides for scheduling and distribution of bandwidth to UEs, and scheduling of downlink and uplink data. The MAC layer also provides for random access procedure control to enable a UE that is not allocated with uplink radio resources to access and synchronize with the network. The MAC is also responsible for uplink timing alignment to ensure that UE transmissions do not overlap when received at the eNodeB. Discontinuous reception (DRX)/discontinuous transmission (DTX) is also implemented at the MAC layer to save battery life by limiting the time the UE receives downlink channels. The MAC layer also provides for Hybrid Automatic Repeat ReQuest (HARQ) and maps RLC data received through logical channels onto transport channels connecting the MAC layer with the L1 or PHY layer.

The RLC layer provides for reformatting (e.g., segmentation, concatenation) of packets output by the PDCP (also referred to as Protocol Data Units (PDUs)) to the fit size requirements of the MAC layer. Transport block sizes can depend on bandwidth requirements, distance, power requirements, modulation approaches, and type of application. The RLC also reorders packets received out of sequence during HARQ operation. The RLC communicates with the PDCP through a Service Access Point (SAP) and with the MAC through logical channels. There are three modes of data transmission by the RLC: Transparent Mode, Unacknowledged Mode, and Acknowledged Mode. Transparent Mode is a pass-through mode which maps packets received by the RLC (also referred to as Service Data Units (SDUs)) to RLC PDUs without any overhead or modification to packets. Transparent Mode is used for some control signaling such as broadcast system information and paging messages. Unacknowledged Mode can be used for delay sensitive traffic such as VoIP. Unacknowledged Mode can also be used for point to multipoint data flow such as Multimedia Broadcast/Multicast Service (MBMS). In Unacknowledged Mode, the RLC layer performs segmentation and concatenation of RLC SDUs, reordering and duplicate detection of RLC PDUs, and reassembly of RLC SDUs. Acknowledge Mode is used to support data tolerant to delay but sensitive to error (e.g., web browsing or file download). In this mode, data flow may be bidirectional such that the RLC can transmit and receive data. The RLC can also apply Automatic Repeat reQuest (ARQ) to correct erroneous packets through retransmission of data. In Acknowledge Mode, the RLC can perform the functions of Unacknowledged Mode as well as retransmission of RLC data plane PDUs, resegmentation of retransmitted RLC data PDUs, polling, and status reporting.

The PDCP layer provides for header compression and decompression for all user plane data packets. Compression and decompression is based on the Robust Header Compression (RoHC) protocol which stores static parts of the header and updates them when they change. The dynamic parts of the header are compressed by transmitting the difference from the reference. RoHC can achieve significant savings on bandwidth and processing resources for services such as VoIP where the IP/UDP/RTP header comprises a large percentage of the actual packet. For example, the IPv4 header is 40 bytes, which can be compressed to 4-6 bytes for a VoIP payload of 32 bytes. The PDCP layer also provides for handover management. The PDCP layer reorders and sequences packets output by an LTE radio protocol layer (also sometimes referred to as Protocol Data Unit (PDU)) during a handover from one cell coverage area to another. Handovers can be seamless or lossless. Seamless handovers correspond to data that is tolerant to loss but not delay, such as control plane data and RLC Unacknowledged Mode user plane data. A seamless handover is designed to minimize delay as no security data is exchanged between the source and target eNodeB during such a handover. A packet received at the PDCP (sometimes referred to as the PDCP Service Data Unit (SDU)) at the eNodeB that has not been transmitted is forwarded over the X2 interface for transmission by the target eNodeB. A PDCP SDU at the UE that has not been transmitted is buffered and transmitted after the handover is complete. A lossless handover corresponds to data tolerant to delay but not loss, such as for a file download where minimal packet loss is preferred to save bandwidth utilization and increase data rate. A lossless handover is applied to RLC Acknowledge Mode bearers. The PDCP layer also provides for security, such as encryption and decryption of user and control plane data to protect against eavesdropping and preventing packet insertion or replacement by a malicious user. In some embodiments, SNOW 3G or AES-128 encryption can be used to provide security for user and control plane data.

**FIG. 2B** illustrates the control plane protocol stack **250,** shaded in gray herein. The lower layers perform the same functions as for the user plane with the exception that there is no header compression function for the control plane. The control plane supports radio functionality, and depends on of two states of the UE, Idle Mode (RRC_IDLE) or Connected Mode (RRC_CONNECTED). In Idle Mode, the UE camps on a cell after a cell selection or reselection based on factors such as radio link quality, cell status, and radio access technology. The UE may also monitor a paging channel to detect incoming calls and acquire system information. In Idle Mode, the control plane protocols include cell selection and reselection procedures. In Connected Mode, the UE supplies the E-UTRAN with download channel quality and neighbor cell information to enable the E-UTRAN to select the most appropriate cell for the UE.

The control plane protocol also includes the Radio Resource Control (RRC) protocol, which involve transmission of Non-Access Stratum (NAS) information. The RRC protocol also provides for broadcasting of system information based on the mode of the UE. System information is defined in System Information Blocks (SIBs). In addition, the RRC provides a Master Information Block (MIB), which includes a limited number of the most frequently transmitted parameters necessary for a UE's initial access to the network. System information is mapped to different logical channels depending on the state of the UE and the type of information. The RRC also includes procedures for establishment, modification and release of RRC connections for paging, security activation, Signaling Radio Bearers (SRBs), Data Radio Bearers (DRBs), handover, and other functions such as configuration of lower protocol layers. To reduce E-UTRAN overhead and processing by a UE registered to the MME, UE-related information can be released after a long period of inactivity. During such periods, the MME stores the UE context and established bearer information. These states are known as EPS Connect Management (ECM) Idle and Connected Modes. The UE state at the MME is captured by the EPS Mobility Management (EMM) state and can be either Deregistered or Registered. An RRC connection is used for transitions between ECM Idle and Connected Mode. When setting DRBs, the RRC configures the lower layers (PDCP, RLC, MAC, and PHY). For example, the RRC may cause the PDCP to apply header compression for VoIP packets or the MAC to apply HARQ for delay-tolerant traffic. The RRC may also assign Prioritized Bit-Rates (PBRs) to control how the UE divides uplink resources between different radio bearers. The RRC also provides for mobility procedures, security activation, transfer of UE RRC context data, and measurement and configuration reporting for mobility support.

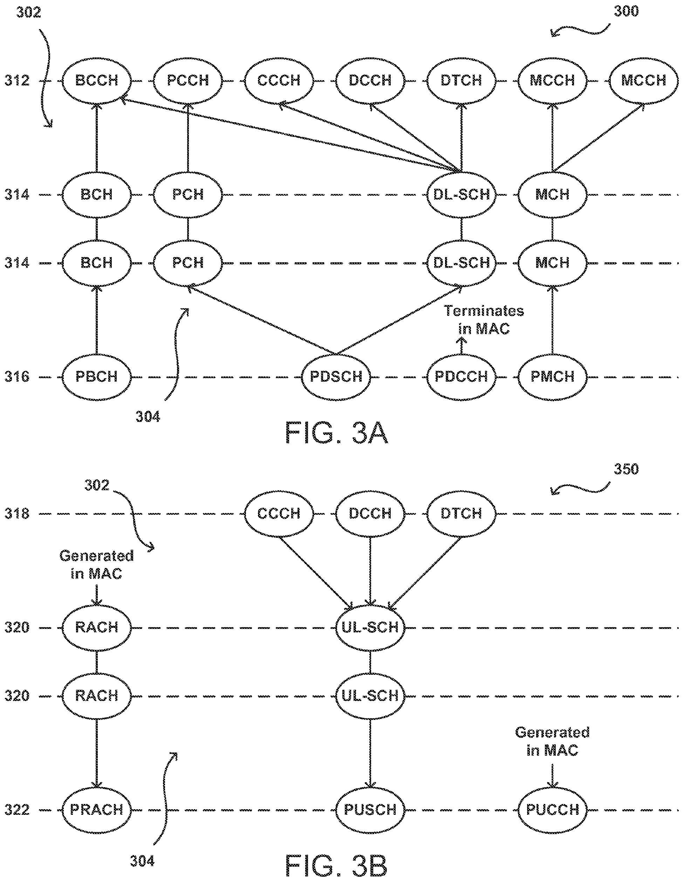

As mentioned, the MAC layer manages HARQ functions. The MAC layer also provides for transport of resource blocks as a logical mapping of different logical channels out of the transport block for the higher layers. The HARQ process, performed between the MAC and PHY layers, retransmits transport blocks for error recovery. The PHY performs retention and recombination (incremental redundancy), and the MAC layer is responsible for management and signaling. The MAC layer provides a NACK when there is a transport block CRC failure, and the PHY typically provides a signal for the CRC failure. Retransmission is performed by the eNodeB or the sender on the downlink using a different type of coding. The coding is sent and maintained in buffers in the eNodeB. Eventually, such as between one to four attempts, there will be sufficient data to reconstruct the signal. In the HARQ process, the retransmission of the transport block does not have to be fully correct. It is sufficient for the transport block to be correct enough to be combined mathematically with the previous transport block in order to generate a correct transport block. Logical channels are at the top of the MAC layer. Logical channels represent data transfer services offered by the MAC, and are defined by the type of information the logical channel carries. Types of logical channels can include control channels for control plane data and traffic channels for user plane data. Transport channels are in the transport blocks at the bottom of MAC layer. Transport channels represent data transfer services offered by the PHY, and are defined by the information carried, physical layer modulation, and/or encoding. **FIG. 3A** illustrates an example **300** of the mapping of downlink physical channels **316** in the PHY layer **304** to downlink transport channels **314** in the interface between the PHY layer and MAC layer **302** and downlink transport channels to the logical channels **312** in the MAC layer. In this example, the logical channels **312** include the Broadcast Control Channel (BCCH), Paging Control Channel (PCCH), Common Control Channel (CCCH), Dedicated Control Channel (DCCH), Dedicated Traffic Channel (DTCH), Multicast Control Channel (MCCH), and the Multicast Traffic Channel (MTCH). The BCCH is a downlink channel for broadcasting system control data. The PCCH is a downlink channel that transfers paging information. This logical channel may be used when the network does not know the location of the UE. The CCCH is an uplink channel for transmitting control data between UEs and the network. This logical channel can be used by the UEs having no connection to an RRC. The DCCH is a point-to-point bidirectional channel that transmits dedicated control data between a UE and the network. This logical channel is used by UEs that have an RRC connection. The DTCH is a point-to-point channel, dedicated to one UE, for the transfer of user data. The DTCH operates in both uplink and downlink. The MCCH is a point-to-multipoint downlink channel for transmitting Multimedia Broadcast Multicast Service (MBMS) control data from the network to the UE, for one or several MTCHs. This logical channel is only used by UEs that receive MBMS. The MTCH is a point-to-multipoint downlink channel used for transmitting traffic data from the network to the UE. This logical channel is only used by UEs that receive MBMS. At time *T₁*, the UE enters "sleep" mode, and the RF modem can be turned off, the UE does not attempt to send data to the UE, and/or other power saving measures can be performed.

Also illustrated in this example are transport channels **314,** which include the Broadcast Channel (BCH), Paging Channel (PCH), Downlink Shared Channel (DL-SCH), and the Multicast Channel (MCH). Transport channels use different modulations and coding. The BCH, PCH, and MCH must be received everywhere in the coverage area of the eNodeB, so they must use robust modulation. The BCH uses a fixed, pre-defined transport format. The PCH supports discontinuous reception (DRX) to enable UE power saving. This transport channel maps to physical resources which can be used dynamically for traffic and other control channels. The DL-SCH provides support for HARQ, dynamic link adaptation by varying the modulation, coding, and transmit power, dynamic and semi-static resource allocation, and UE DRX, and MBMS transmission. In some embodiments, DL-SCH can support broadcast in an entire cell and beam forming. This transport channel can be optimized by the UE. Download physical channels **316** PBCH, PDSCH, PDCCH, and PMCH are also shown, and their functions are discussed elsewhere herein.

**FIG. 3B** illustrates an example **350** of the mapping of uplink physical channels **322** in the PHY layer **304** to uplink transport channels **320** in the interface between the PHY layer and MAC layer **302** and uplink transport channels to the logical channels **318** in the MAC layer. The logical channels **318** include the CCCH, DCCH, and DTCH, which are mapped to the Uplink Shared Channel (UL-SCH). The transport channels include the Random Access Channel (RACH) and UL-SCH. The RACH carries minimal information, and transmissions on this transport channel may be lost due to collisions. The UL-SCH supports dynamic link adaptation by varying the transmit power, HARQ, and dynamic and semi-static resource allocation. In some embodiments, this transport channel can also support beam forming and dynamic link adaptation by varying modulation and coding. The physical uplink channels **322** include the PRACH, PUSCH, and PUCCH, which are discussed elsewhere herein.

All MAC transmission on the UL-SCH must be scheduled by the Random Access Channel (RACH) procedure. When the UE is not connected to the network, no transmit slots are scheduled for that UE. The RACH provides a means for disconnected devices to transmit data. Transmitting on the UL-SCH requires a resource allocation from the eNodeB, and time alignment to be current, or the RACH procedure is required. The RACH procedure can be used during initial access from the disconnected state (RRC_IDLE) or radio access failure, handover requiring random access, DL or UL data arriving during RRC CONNECTED after UL PHY is no longer in sync, or UL data arriving when no dedicated scheduling request channels are available. Timing is critical because the UE can move different distances from the base station, and LTE requires microsecond-level precision. There are two types of the RACH procedure, contention-based, which can apply to each of these situations, and non-contention-based, which applies to handover and arrival of DL data.

In LTE, the MAC layer in eNodeB allocates physical layer resources for the DL-SCH and UL-SCH. Different schedulers operate for the DL-SCH and UL-SCH. Resources are composed of Physical Resource Blocks (PRBs) and Modulation Coding Schemes (MCS). The MCS can establish the bit rate and capacity of PRBs. Allocations may be valid for one or more Transmission Time Intervals (TTIs) with each TTI comprising a 1 ms subframe. In various embodiments, semi-persistent scheduling (SPS) can be utilized to reduce control channel signaling for applications that require persistent radio resource allocations, such as VoIP. In LTE, both downlink and uplink are fully scheduled since the downlink and uplink traffic channels are dynamically shared channels. This means that the PDCCH must provide access grant information to indicate which users should decode the PDSCH in each subframe and which users are allowed to transmit on the PUSCH in each subframe. Without SPS, every downlink or uplink PRB allocation must be granted via an access grant message on the PDCCH. This may be sufficient for some best-effort types of applications having large packet sizes and requiring scheduling of only a few users for each subframe (e.g., web browsing or file download). However, for applications that require persistent PRB allocations of small packet sizes (*e.g.,* VoIP or VoLTE), the access grant control channel overhead becomes untenable. SPS enables set up of an ongoing allocation of resources that persists until a signal is detected on the PDCCH to change such allocation. Semi-persistent schedules can be configured for both uplink and downlink.

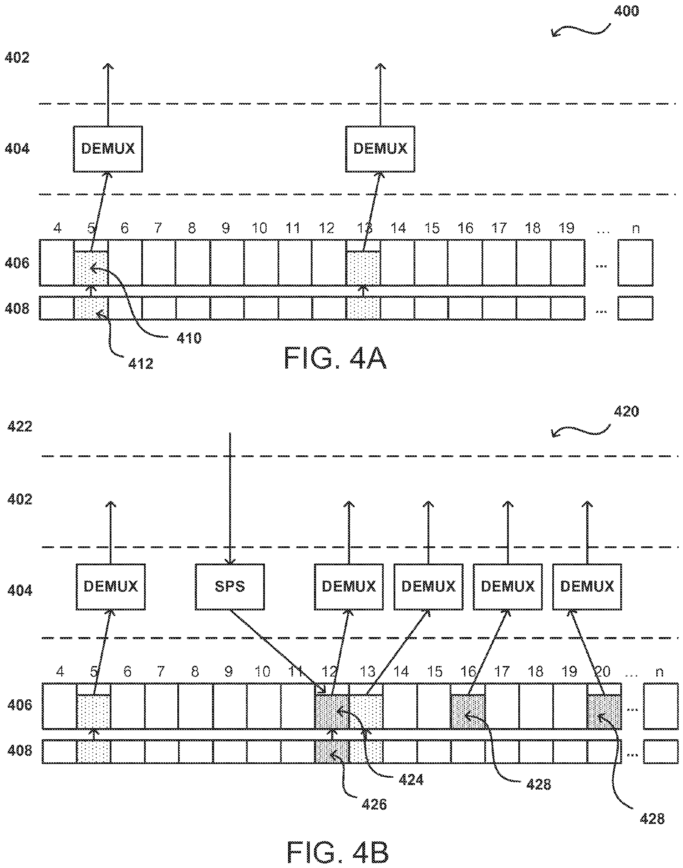

**Fig. 4A** illustrates an example **400** of dynamic downlink scheduling. In this example, the PDCCH **408** carries the Cell Radio Network Temporary Identifier (C-RNTI) **412** representing the dynamic UE identifier. The presence of the C-RNTI **412** in the PDCCH **408** signals that the downlink resource **410** has been demultiplexed by the MAC layer **404,** passed onto higher layers, such as the RLC and PDCP **402,** and is now scheduled for this particular UE. Whether scheduling is dynamic is signaled by using different scrambling codes for the C-RNTI on the PDCCH.

**FIG. 4B** illustrates an example **420** of semi-persistent scheduling and dynamic scheduling. SPS periodicity is configured by the RRC **422.** In this example, semi-persistent scheduling information is added to the dynamic scheduling information shown in **FIG. 4A****.** The RRC **422** has configured certain transmissions using SPS according to a four-TTI interval. The first time a semi-persistent scheduled transmission **424** occurs, there is signaling **426** on the PDCCH **408.** After the first semi-persistent scheduled transmission, there is a transmission **428** every four TTIs without any signaling on the PDCCH **408.** The SPS-scheduled transmissions carry on until changed by another signal on the PDCCH.

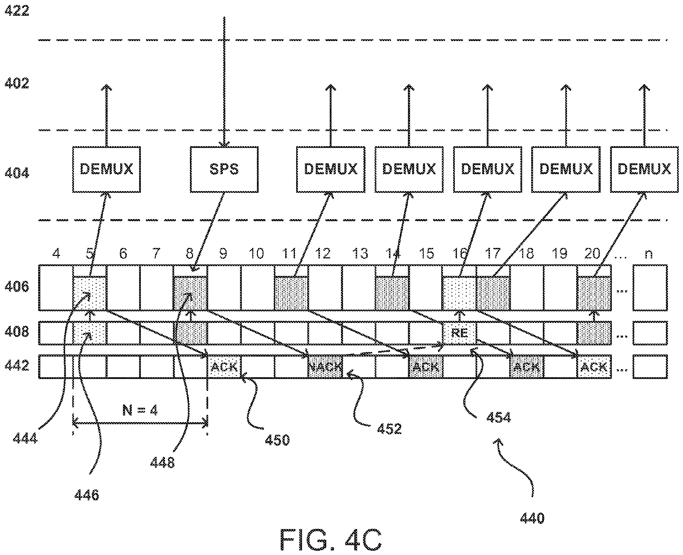

**FIG. 4C** illustrates an example **440** of downlink scheduling with HARQ. Again, the C-RNTI **446** is found on the PDCCH **408,** signaling that a downlink resource **444** is scheduled for this UE. HARQ generates an acknowledgement (ACK) or negative acknowledgement (NACK) on the PUCCH **442** on subframe n+4, for each downlink transport block. In this example, there is an ACK **450** for the downlink transport block **444** indicating no errors during transmission. However, there is NACK **452** for the downlink transport block **448** so a subframe needs to be retransmitted using HARQ. The retransmission **454** is signaled dynamically and downlinked, then the subframe **456** is decoded and sent up to higher layers. Finally, the subframe **456** has to be acknowledged again.

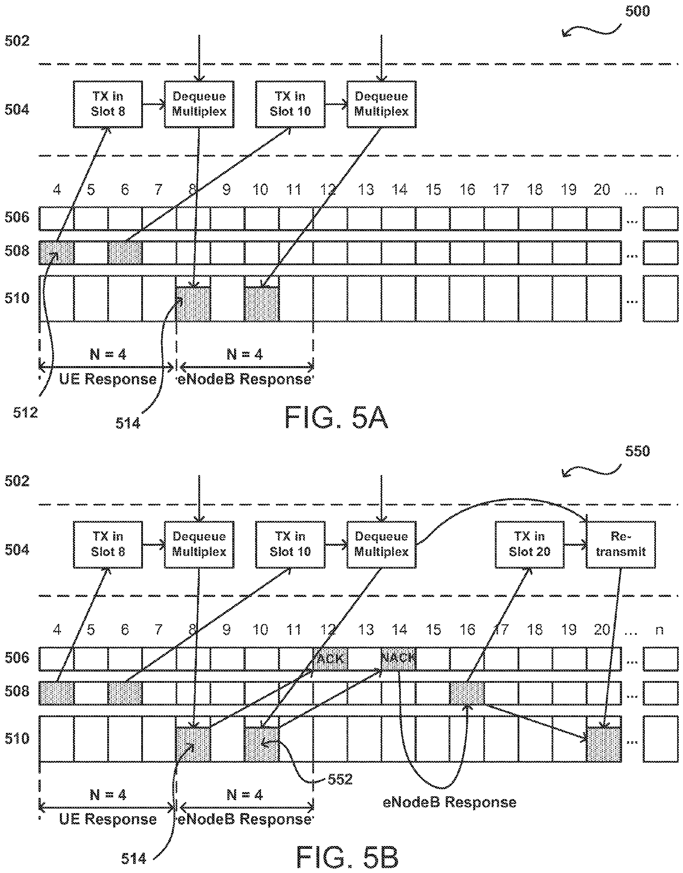

**FIG. 5A** illustrates a first example **500** of uplink scheduling with HARQ. As with downlink, uplink scheduling information can be found on the PDCCH **508.** The C-RNTI **512** on the PDCCH **508** signals that an upcoming uplink resource is scheduled for this UE in 4 TTI. The 4 TTI delay between when the uplink slot becomes available to when the uplink resource **514** actually has to be sent to the UL-SCH **510** provides the UE time to dequeue, determine the proper priority, and determine the best way to pack the transport block with information based on the QoS requirements of the scheduler running locally (in the MAC layer **504** and RLC and higher layers **502).** **FIG. 5B** illustrates a second example **550** of uplink scheduling with HARQ. The PHICH **506** provides feedback from the eNodeB back to the UE on the HARQ process for the uplink. In particular, the PHICH **506** carries ACK/NACK messages for uplink data transport blocks. HARQ is synchronous on uplink, with a fixed time of 4 TTI from uplink to ACK/NACK on the downlink from the eNodeB. The eNodeB responds back with an opportunity to retransmit which is then scheduled, retransmitted, and acknowledged (or not acknowledged). In this example, the uplink data transport block **514** receives an ACK from the eNodeB, while the uplink data transport block **552** receives a NACK. Upon receiving the NACK signal, retransmit is scheduled on the PDCCH **508** and the data transport block **552** is retransmitted via the UL-SCH **510.**

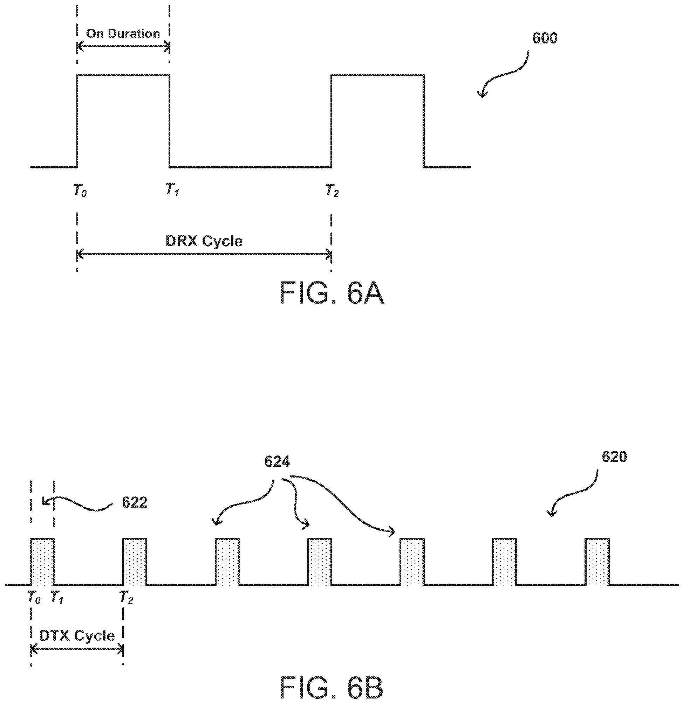

As mentioned, LTE utilizes certain power saving protocols such as Discontinuous Reception (DRX)/Discontinuous Transmission (DTX). Both approaches reduce transceiver duty cycle (or receiver duty cycle and transmitter duty cycle in embodiments having separate hardware for the receiver and the transmitter) while a UE is in active operation, *i.e.,* when the UE is in Connected Mode. DRX/DTX can also apply when the UE is in IDLE mode but with a longer cycle time than when in Connected Mode. The RRC sets a cycle wherein the UE transceiver (or receiver and transmitter) is operational for a specified period of time during which the UE can receive data from/transmit data to the network. After the specified period of time, the UE transceiver (or receiver and transmitter) can be turned off and/or the UE is not required to monitor the PDCCH until the UE is "awaken." **FIG. 6A** illustrates an example **600** of a DRX cycle for an interval of time from *T₀* to *T₂.* The *T₀-T₁* time interval corresponds to the DRX cycle's "on duration," when the UE is "awake" and capable of receiving data from the network. At time *T₁,* the UE enters "sleep" mode, and the UE receiver can be turned off, the UE does not check the PDCCH, and/or other power saving measures can be performed. At time *T₂*, the UE is "awoken" and the DRX cycle begins anew. In some embodiments, there can be dynamic transitions between "long" DRX/DTX cycles and "short" DRX/DTX cycles, wherein the "long" DRX/DTX cycle has a longer "off duration." This transition can be determined by the eNodeB in the MAC layer or by the UE based on an activity timer. Durations for long and short DRX/DTX cycles can be configured by the RRC.

**FIG. 6B** illustrates an example **620** of a DTX cycle for an interval of time from *T₀* to *T₂.* The *T₀-T₁* time interval corresponds to the DTX cycle's "on duration" **622,** when the UE is "awake" and capable of transmitting data to the network. At time *T₁*, the UE enters "sleep" mode, and the UE transmitter can be turned off, the UE does not attempt to send data to the network, and/or other power saving measures can be performed. At time *T₂,* the UE is "awoken" and can attempt to transmit data to the network, such as by sending a scheduling request (SR) or a buffer status report (BSR). In various embodiments, DRX/ DTX can be used for VoIP or VoLTE. For example, a longer DRX cycle could be used during a pause in speaking during a VoIP or VoLTE call since voice packets are coming at a lower rate and the UE receiver can be off for a longer period of time. When speaking resumes and voice packets are coming in more frequently, the DRX cycle can be reduced. Similarly, DTX can be used when only voice packets are being transmitted from a UE. For instance, in the example **620,** the DTX cycle can be set to 20 ms such that voice packets **624** from the UE will only be transmitted during the "on duration" **622** of the DTX cycle, and the UE transmitter can be turned off for the remainder of the DTX cycle to conserve battery life, among other power saving operations.

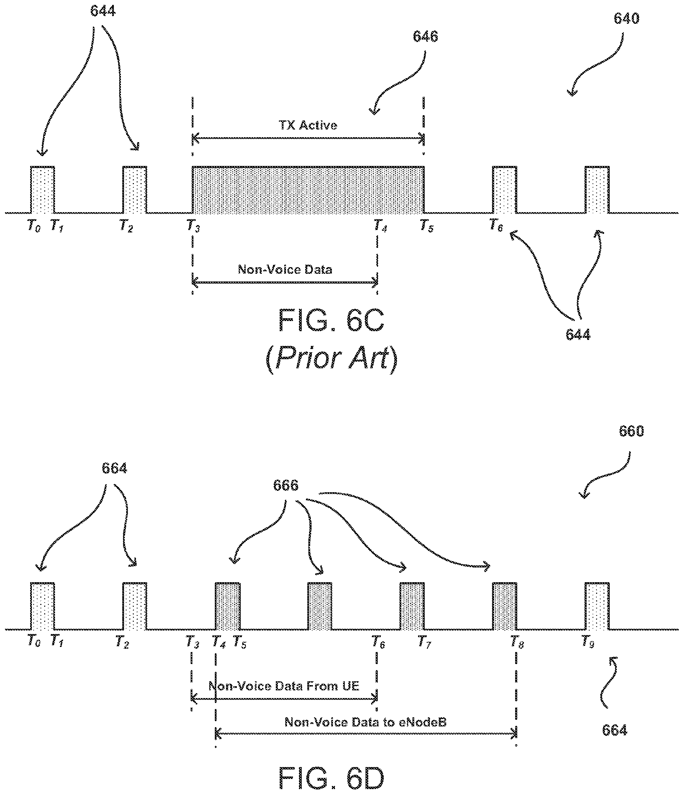

When the UE has non-voice data to transmit to the network, however, conventional power saving approaches may be ineffective. **FIG. 6C** illustrates an example situation **640** of a UE being used to make a VoIP or VoLTE call when the UE obtains packets of a second type of data (*i.e.,* non-voice packets) to send to the network. At time interval *T₀-T₁,* the UE transmitter is turned on and one or more voice packets **644** can be transmitted to the network during this period. At time interval *T₁-T₂,* the UE transceiver is turned off and other power saving measures can be performed, such as turning off monitoring of the PDCCH. Time interval *T₀-T₂* may correspond to a DTX cycle controlled by the eNodeB or UE via activity timer. At time *T₃,* the UE obtains uplink data of a second type of data to be transmitted to the network. In conventional approaches, DRX/DTX is deactivated and the UE transceiver (or receiver and transmitter) is active until all of the uplink data of the second type of data is sent at *T₄* and for a hysteresis period of time *T₄-T₅* in the event additional uplink data of the second type of data needs to be sent and/or to ensure no retransmissions are required. During this period when the transceiver is active, both voice data and uplink data of the second type of data **646** are transmitted to the network. While the UE transceiver is active and DRX/DTX is deactivated, the power savings of DRX/DTX are not realized. At time *T₆*, DRX/DTX can be reactivated and voice packets **644** can be transmitted according to SPS allocation.

Systems and approaches in accordance with various embodiments can realize power savings during simultaneous transmission of data having distinct profiles, such as VoIP or VoLTE packets and non-voice data, by aligning the transmission of data of a first type, such as the non-voice data, with the SPS uplink timing for data of a second type, such as VoIP or VoLTE packets. **FIG. 6D** illustrates an example approach **660** for aligning transmission of VoIP or VoLTE data packets **664** and non-voice data packets in accordance with various embodiments. In this example, the UE is being used to make a VoIP or VoLTE call and DTX is activated such that the UE transmitter is turned on during the on duration (*e.g.,* time intervals *T₀-T₁, T₄-T₅*) of each DTX cycle (*e.g., T₂-T₄*) for transmission of voice packets **664** from the UE to the network, and turned off the remainder of the DTX cycle (*e.g., T₁-T₂*)*.* At time *T₃,* the UE obtains non-voice uplink data to be transmitted to the network. Whereas in conventional approaches DRX/DTX may be deactivated, in this example, transmission of the non-voice data is delayed until time *T₄.* During time interval *T₄-T₅,* the UE transmitter is turned on both voice packets and non-voice data packets **666** can be sent to the network from the UE. No transmissions occur after time *T₅* until the next DTX cycle begins. In some embodiments, the eNodeB may allocate the UE additional PRBs for transmission of the non-voice data packets based on factors such as slot availability, the QoS corresponding to the non-voice data packets, and other such considerations. In this example, additional PRBs have not been granted and/or the additional PRBs may not be sufficient to transmit the non-voice data packets during the DTX cycle's on duration such that the transmission of the non-voice packets does not conclude until time *T₈.* In other embodiments, the UE may be granted a sufficient amount of PRBs such that transmission of the non-voice data packets can be completed by the end of the on duration of the next DTX cycle. For example, if the non-voice data received to the UE ends at time *T₆*, then the transmission of the non-voice data can be completed at time *T₇.* At time *T₉,* only voice packets 664 are transmitted according to SPS allocation.

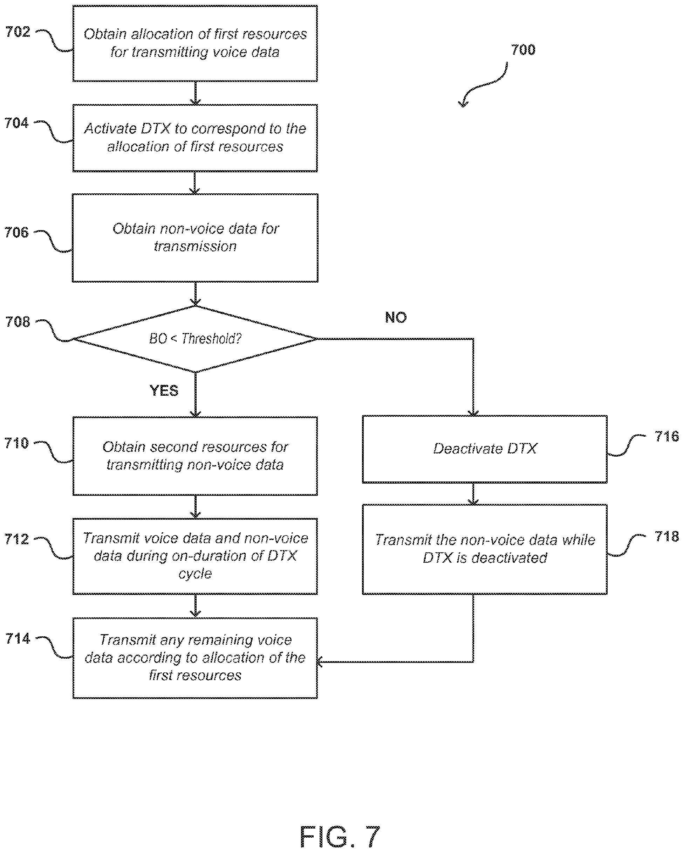

**FIG. 7** illustrates an example process **700** for transmitting data from a user device to a network in accordance with an embodiment. It should be understood that, for any process discussed herein, there can be additional, fewer, or alternative steps performed in similar or alternative orders, or in parallel, within the scope of the various embodiments unless otherwise stated. In this example, the process can be initiated by user making a VoIP or VoLTE phone call using a computing device configured to support such applications. As mentioned, semi-persistent scheduling can be used to reduce control channel overhead for applications that require persistent radio resource allocations, such as VoIP or VoLTE. When the VoIP or VoLTE phone call is made by the user of the computing device, the computing device can transmit a request to the network for first resources, such as PRBs and MCSs, for the computing device to transmit voice data to the network. The network may provide the computing device with an allocation of the first resources that is based on SPS in response **702.** For example, the computing device can send an initial scheduling request (SR) (or a BSR in some embodiments) to the network for the first resources to transmit voice data, and the network may provide an allocation of the first resources including an initial time slot at which the first resources will be available for the computing device to transmit the voice data and intervals at which the first resources will be available to the computing device. In various embodiments, the first resources will continue to be available to the computing device at the periods of time corresponding to the intervals until the computing device ceases to send voice data for a determined duration or explicitly signals that the first resources are no longer needed. The computing device may activate DTX for power-saving purposes **704** by activating the transmitter (or RF modem or transceiver in certain embodiments) at periods of time corresponding to when the first resources have been made available for transmission of the voice data. At some point during the VoIP or VoLTE phone call, the computing device may obtain non-voice data for transmitting to the network **706.** For instance, the user may be working collaboratively with a second user on the other end of the VoIP or VoLTE phone call via a web-based whiteboard or a cloud-based word processing document or spreadsheet, or the user may be playing a web-based video game during the phone call. Such activity will cause non-voice data to be generated for transmission over the network. The computing device will then determine whether its buffer occupancy (BO) is below a threshold BO amount **708.** The threshold BO amount can be statically defined in some embodiments. In other embodiments, the threshold BO amount can be calculated dynamically based on factors such as length of the DRX/DTX cycle, data traffic type, QoS associated with the non-voice data (*e.g.,* resource type, priority, packet delay budget, packet error loss rate), radio conditions of the computing device (e.g., from CQI reports or HARQ retransmission information), and other such considerations. In some embodiments, the threshold BO can include a hysteresis component to avoid a state in which the computing device transitions back and forth between the on duration or active time of DTX and SPS allocation. The hysteresis component can be a default value configured in the UE or established by the eNodeB. In some embodiments, the hysteresis component can include a dynamic component that factors in uplink queue size (by number of packets or packet size), time-sensitivity, or priority of packets. When the determined BO amount of the computing device is below the threshold BO amount (including a hysteresis component in some embodiments), transmission of the non-voice data packets can be aligned with the next semi-persistent uplink grant allocated for the VoIP or VoLTE call. As mentioned, conventional approaches may deactivate DTX when non-voice data is to be transmitted to the network while a device is conducting a VoIP or VoLTE call. Such an approach leaves the transmitter powered on for the duration of the transmission of the non-voice data and may unnecessarily drain the power of the device. Instead, in some embodiments, a special buffer status report (BSR) with a logical channel ID can be sent informing the network of the non-voice data and that such data should be scheduled for transmission concurrently with voice data. Buffer status reports (BSR) are discussed in "LTE; Evolved Universal Terrestrial Radio Access (E-UTRA); Medium Access Control (MAC) Protocol Specification," 3GPP Technical Specification (TS) 36.321 (hereinafter, the "MAC specification"), which is incorporated herein by reference. The LTE standard can be modified to create a new logical channel ID in the MAC protocol that can be used by a computing device to inform the network of the presence of the non-voice data and for the network to schedule transmission of the non-voice data according to a same schedule as the SPS-allocated voice data. Further, a new control element can be defined in the MAC header to manage alignment of non-voice data with the SPS-allocated voice data via the special BSR. In other embodiments, a special scheduling request (SR) can be sent to the network informing the network of the non-voice data and specifying that the non-voice data be transmitted concurrently with the SPS-allocated voice data. Scheduling requests are also discussed in the MAC specification. In still other embodiments, a standard SR can be sent to the network, and the computing device can buffer the non-voice data until an SR transmission opportunity coinciding with transmission of the SPS-allocated voice data. For example, the computing device can send an SR so as to receive from the network an allocation of second resources to transmit the non-voice data. The network can provide an allocation of second resources to transmit the non-voice data, and the computing device can buffer the non-voice data until a mutual period of time corresponding to when first resources are available for transmission of the voice data and second resources are available for transmission of the non-voice data. Using these various approaches, the network can provide an allocation of second resources for the computing device to send the non-voice data **710.** The network may allocate the second resources to coincide with the allocation of the first resources when a special BSR or SR is sent, or the computing device can buffer the non-voice data until a mutual period of time when both the first resources and second resources are available to the computing device. In this manner, voice data and non-voice data can be transmitted simultaneously or substantially simultaneously **712** such that DTX can remain activated, and the power savings of DTX can still be realized even when voice data and non-voice data are to be transmitted during a same period of time. After the non-voice data is transmitted, voice data can be transmitted according to SPS until the VoIP or VoLTE call is completed **714.**

If it is determined that the BO amount is greater than or equal to the BO threshold 706, the computing device can deactivate DRX/DTX **716** such that the computing device's transceiver is active. Voice packets and the non-voice data packets can be transmitted during the active time of the transmitter **718.** After the non-voice data has been transmitted, DRX/DTX can be reactivated and the remaining voice packets of the VoIP or VoLTE can be transmitted based on SPS until the call is complete **714.** Although process **700** illustrates an example of data transmission from the computing device directed by the UE, it will be appreciated that in other embodiments, data transmission flow can be directed from the eNodeB or network in other embodiments. For example, when a particular UE has been granted a semi-persistent allocation of PRBs for VoIP or VoLTE and then sends a BSR or SR indicating non-voice data for transmission to the network, the eNodeB can send a control signal to the UE to delay transmission of non-voice data in accordance with the SPS allotments for the voice data. Further, instead of the UE determining the BO threshold and passing the information to the eNodeB, the eNodeB can obtain that information or derive similar information from the various measures the UE provides to the eNodeB, such as CQI reports, HARQ/ARQ retransmission information, and other such UE measurements.

Embodiments of the disclosure can be described in view of the following clauses:
1. A computing device, comprising:
   a processor;
   a receiver;
   a transmitter; and
   memory including instructions that, when executed by the processor, cause the computing device to perform:
      send to a network, via the transmitter, a request for resources to transmit voice packets;
      receive from the network, via the receiver, an allocation of the resources to transmit the voice packets, the allocation indicating intervals at which the resources are available to the computing device to transmit one or more of the voice packets without requiring additional requests for the resources;
      activate the transmitter during first periods of time corresponding to the intervals at which the resources are available to the computing device to transmit the one or more of the voice packets;
      deactivate the transmitter during second periods of time corresponding to when the resources are not available to the computing device to transmit the one or more of the voice packets;
      obtain one or more non-voice data packets for transmission to the network;
      determine whether a buffer occupancy of the computing device is below a buffer occupancy threshold; and
      in response to determining that the buffer occupancy of the computing device is below the buffer occupancy threshold, cause at least one of the voice packets and at least one of the non-voice data packets to be transmitted during a period of time corresponding to an interval at which the resources are available to the computing device to transmit the one or more voice packets.
2. The computing device of clause 1, wherein the instructions when executed to cause the at least one of the voice packets and the at least one of the non-voice data packets to be transmitted includes causing the computing device to:
   send to the network, via the transmitter, a second request for second resources to transmit the at least one of the non-voice data packets, the second request indicating that the at least one of the non-voice data packets is to be scheduled for transmission during the period of time corresponding to the interval at which the resources are available to the computing device to transmit the one or more voice packets;
   receive from the network, via the receiver, a second allocation of the second resources to transmit the at least one of non-voice data packets during the period of time corresponding to the interval; and
   transmit to the network, via the transmitter, the at least one of the voice packets, using the resources, and the at least one of the non-voice data packets, using the second resources, during the period of time corresponding to the interval.
3. The computing device of clause 1, wherein the instructions when executed to cause the at least one of the voice packets and the at least one of the non-voice data packets to be transmitted includes causing the computing device to:
   send to the network, via the transmitter, a second request for second resources to transmit the at least one of the non-voice data packets;
   receive from the network, via the receiver, a second allocation of the second resources to transmit the at least one of the non-voice data packets;
   buffer the at least one of the non-voice data packets until a mutual period of time corresponding to the interval at which the resources are available to the computing device to transmit the one or more voice packets and when the second resources are available to the computing device to transmit the at least one of the non-voice data packets; and
   transmit to the network, via the transmitter, the at least one of the voice packets, using the resources, and the at least one non-voice data packet, using the second resources, during the mutual period of time.
4. The computing device of clause 1, wherein the instructions when executed to cause the computing device to determine whether the buffer occupancy of the computing device is below the buffer occupancy threshold includes causing the computing device to determine at least one of a length of a DTX cycle of the transmitter of the computing device, data traffic type corresponding to the non-voice data packets, quality of service metrics corresponding to the non-voice data packets, a resource type of the non-voice data packets, a priority corresponding to the non-voice data packets, a packet delay budget corresponding to the non-voice data packets, a packet error loss rate corresponding to the non-voice data packets, a data throttling rate, or radio conditions of the computing device.
5. A computer-implemented method, comprising:
   under the control of one or more computer systems configured with executable instructions,
   obtaining an allocation of resources for transmission of packets of a first type of data from a computing device to a network, the allocation indicating intervals at which the resources are available to the computing device to transmit one or more of the packets of the first type of data;
   activating a transmitter of the computing device during first periods of time corresponding to the intervals at which the resources are available to the computing device to transmit the one or more of the packets of the first type of data;
   deactivating the transmitter during second periods of time corresponding to when the resources are not available to the computing device to transmit the one or more of the packets of the first type of data;
   obtaining, at the computing device, one or more packets of a second type of data for transmission to the network; and
   causing at least one packet of the first type of data and at least one packet of the second type of data to be transmitted from the computing device to the network during a period of time corresponding to an interval at which the resources are available to the computing device to transmit the one or more packets of the first type of data.
6. The computer-implemented method of clause 5, further comprising:
   determining a buffer occupancy threshold of the computing device,
   wherein the period of time corresponding to the interval is based at least in part upon the buffer occupancy threshold of the computing device.
7. The computer-implemented method of clause 6, wherein determining the buffer occupancy threshold of the computing device includes determining at least one of a length of a DTX cycle of the transmitter of the computing device, data traffic type corresponding to the at least one packet of the second type of data, quality of service metrics corresponding to the at least one packet of the second type of data, a resource type of the at least one packet of the second type of data, a priority corresponding to the at least one data packet of the second type of data, a packet delay budget corresponding to the at least one data packet of the second type of data, a packet error loss rate corresponding to the at least one data packet of the second type of data, a data throttling rate, or radio conditions of the computing device.
8. The computer-implemented method of clause 5, wherein causing the at least one packet of the first type of data and the at least one packet of the second type of data to be transmitted includes:
   sending to the network a second request for second resources to transmit the at least one packet of the second type of data, the second request indicating that the one packet of the second type of data is to be scheduled for transmission during the period of time corresponding to the interval at which the resources are available to the computing device to transmit the one or more packets of the first type of data;
   receiving from the network a second allocation of the second resources to transmit the one packet of the second type of data during the period of time corresponding to the interval; and
   transmitting to the network the at least one packet of the first type of data, using the resources, and the at least one packet of the second type of data, using the second resources, during the period of time corresponding to the interval.
9. The computer-implemented method of clause 8, wherein sending to the network the second request for the second resources includes sending at least one of a buffer status report or a scheduling request, the at least one of the buffer status report or the scheduling request indicating that the at least one packet of the second type of data should be scheduled for transmission during the period of time corresponding to the interval.
10. The computer-implemented method of clause 5, wherein causing the at least one packet of the first type of data and the at least one packet of the second type of data to be transmitted includes:
   sending to the network a second request for second resources to transmit the at least one packet of the second type of data;
   receiving from the network a second allocation of the second resources to transmit the at least one packet of the second type of data;
   buffering the at least one packet of the second type of data until a mutual period of time corresponding to the interval at which the resources are available to the computing device to transmit the one or more packets of the first type of data and when the second resources are available to the computing device to transmit the at least one packet of the second type of data; and
   transmitting the at least one packet of the first type of data, using the resources, and the at least one packet of the second type of data, using the second resources, during the mutual period of time.
11. The computer-implemented method of clause 5, wherein the at least one packet of the second type of data is transmitted using the resources.
12. The computer-implemented method of clause 5, wherein the first type of data comprises voice data and the second type of data comprises non-voice data.
13. The computer-implemented method of clause 5, wherein additional requests for the resources to transmit the packets of the first type of data are not required after the allocation of the resources.
14. The computer-implemented method of clause 5, wherein the network complies with at least one of a Long-Term Evolution (LTE) standard or a first variation thereof or IEEE 802.16e or a second variation thereof.
15. A non-transitory computer-readable storage medium storing instructions, the instructions when executed by a processor causing one or more computer systems to:
   provide an allocation of resources for transmission of packets of a first type of data from a computing device to a network, the allocation indicating intervals at which the resources are available to the computing device to transmit one or more of the packets of the first type of data;
   cause a transmitter of the computing device to be activated during first periods of time corresponding to the intervals at which the resources are available to the computing device to transmit the one or more of the packets of the first type of data;
   cause the transmitter to be deactivated during second periods of time corresponding to when the resources are not available to the computing device to transmit the one or more of the packets of the first type of data; and
   cause at least one packet of the first type of data and at least one packet of a second type of data to be transmitted from the computing device to the network during a period of time corresponding to an interval at which the resources are available to the computing device to transmit the one or more packets of the first type of data.
16. The non-transitory computer-readable storage medium of clause 15, wherein the instructions when executed further cause the one or more computer systems to:
   determine a buffer occupancy threshold of the computing device,
   wherein the period of time corresponding to the interval is based at least in part upon the buffer occupancy threshold of the computing device.
17. The non-transitory computer-readable storage medium of clause 16, wherein the instructions when executed to cause the one or more computer systems to determine the buffer occupancy threshold of the computing device includes causing the one or more computer systems to determine at least one of a length of a DTX cycle of the transmitter of the computing device, data traffic type corresponding to the at least one packet of the second type of data, quality of service metrics corresponding to the at least one packet of the second type of data, a resource type of the at least one packet of the second type of data, a priority corresponding to the at least one packet of the second type of data, a packet delay budget corresponding to the at least one packet of the second type of data, a packet error loss rate corresponding to the at least one packet of the second type of data, a data throttling rate, or radio conditions of the computing device.
18. The non-transitory computer-readable storage medium of clause 15, wherein additional requests for the resources to transmit the packets of the first type of data are not required after the allocation of the resources.
19. The non-transitory computer-readable storage medium of clause 15, wherein the instructions when executed further cause the computing device to:
   provide a second allocation of second resources to transmit the at least one packet of the second type of data during the period of time corresponding to the interval.
20. The non-transitory computer-readable storage medium of clause 15, wherein the network complies with at least one of a Long-Term Evolution (LTE) standard or a first variation thereof or IEEE 802.16e or a second variation thereof.

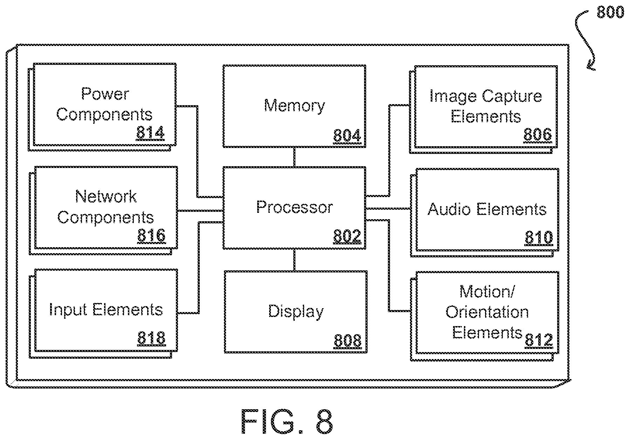

**FIG. 8** illustrates a logical arrangement of a set of general components of an example computing device **800** such as the UE **102** described with respect to **FIG. 1****.** In this example, the device includes a processor **802** for executing instructions that can be stored in a memory device or element **804.** As would be apparent to one of ordinary skill in the art, the device can include many types of memory, data storage, or non-transitory computer-readable storage media, such as a first data storage for program instructions for execution by the processor **802,** a separate storage for images or data, a removable memory for sharing information with other devices, etc. The device typically will include some type of display element **808,** such as a touchscreen, electronic ink (e-ink), organic light emitting diode (OLED), liquid crystal display (LCD), etc., although devices such as portable media players might convey information via other means, such as through audio speakers. In at least some embodiments, the display screen provides for touch or swipe-based input using, for example, capacitive or resistive touch technology. In some embodiments, the device **800** may include one or more cameras or image sensors **806** for capturing image or video content. A camera can include, or be based at least in part upon any appropriate technology, such as a CCD or CMOS image sensor having a sufficient resolution, focal range, viewable area, to capture an image of the user when the user is operating the device. An image sensor can include a camera or infrared sensor that is able to image projected images or other objects in the vicinity of the device. Methods for capturing images or video using a camera with a computing device are well known in the art and will not be discussed herein in detail. It should be understood that image capture can be performed using a single image, multiple images, periodic imaging, continuous image capturing, image streaming, etc. Further, a device can include the ability to start and/or stop image capture, such as when receiving a command from a user, application, or other device. The example device can similarly include at least one audio component **810,** such as a mono or stereo microphone or microphone array, operable to capture audio information from at least one primary direction. A microphone can be a uni-or omni-directional microphone as known for such devices.

In various embodiments, audio element **810** also includes a device for VoIP or VoLTE support. The VoIP device includes a vocoder, an analog-to-digital converter (ADC) to digitize the voice signal and a digital-to-analog converter (DAC) to convert the digital voice to an analog voice for the user. The vocoder can also include functionality for voice signal compression and decompression to effectively minimize the number of bits used to represent the voice such that voice data can be transmitted faster but at lower data rates. In some embodiments, the vocoder may be an Adaptive Multi-Rate (AMR) vocoder that has variable bit-rate capability from 1.8 kbits/s to 12.2 kbits/s. The AMR vocoder segments voice data according to AMR packets, which are then encapsulated into IP packets for transmission.

The computing device **800** includes at least one capacitive component or other proximity sensor, which can be part of, or separate from, the display assembly. In at least some embodiments the proximity sensor can take the form of a capacitive touch sensor capable of detecting the proximity of a finger or other such object as discussed herein. The computing device also includes various power components **814** known in the art for providing power to a computing device, which can include capacitive charging elements for use with a power pad or similar device. The computing device can include one or more communication elements or networking sub-systems **816,** such as LTE or variations thereof, WiMax or variations thereof, Wi-Fi, Bluetooth®, RF, wired, or wireless communication system. The device in many embodiments can communicate with a network, such as the Internet, and may be able to communicate with other such devices. In some embodiments the device can include at least one additional input device **818** able to receive conventional input from a user. This conventional input can include, for example, a push button, touch pad, touchscreen, wheel, joystick, keyboard, mouse, keypad, or any other such device or element whereby a user can input a command to the device. In some embodiments, however, such a device might not include any buttons at all, and might be controlled only through a combination of visual and audio commands, such that a user can control the device without having to be in contact with the device.

The device **800** also can include one or more orientation and/or motion sensors **812.** Such sensor(s) can include an accelerometer or gyroscope operable to detect an orientation and/or change in orientation, or an electronic or digital compass, which can indicate a direction in which the device is determined to be facing. The mechanism(s) also (or alternatively) can include or comprise a global positioning system (GPS) or similar positioning element operable to determine relative coordinates for a position of the computing device, as well as information about relatively large movements of the device. The device can include other elements as well, such as may enable location determinations through triangulation or another such approach. These mechanisms can communicate with the processor **802,** whereby the device can perform any of a number of actions described or suggested herein.

The various embodiments can be further implemented in a wide variety of operating environments, which in some cases can include one or more user computers or computing devices which can be used to operate any of a number of applications. User or client devices can include any of a number of general purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially-available operating systems and other known applications for purposes such as development and database management. These devices can also include other electronic devices, such as dummy terminals, thin-clients, gaming systems and other devices capable of communicating via a network.

The operating environments can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch-sensitive display element or keypad) and at least one output device (e.g., a display device, printer or speaker). Such a system may also include one or more storage devices, such as disk drives, optical storage devices and solid-state storage devices such as random access memory (RAM) or read-only memory (ROM), as well as removable media devices, memory cards, flash cards, etc.

Such devices can also include a computer-readable storage media reader, a communications device (e.g., a modem, a network card (wireless or wired), an infrared communication device) and working memory as described above. The computer-readable storage media reader can be connected with, or configured to receive, a computer-readable storage medium representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices or any other medium which can be used to store the desired information and which can be accessed by a system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the broader scope of the invention as set forth in the claims.

## Claims

1. A computing device (800), comprising:
a processor (802);
a receiver;
a transmitter; and
memory (804) including instructions that, when executed by the processor, cause the computing device to perform:
send to a network, via the transmitter, a request for resources to transmit voice packets;
receive from the network, via the receiver, an allocation of the resources to transmit the voice packets, the allocation indicating intervals at which the resources are available to the computing device to transmit one or more of the voice packets without requiring additional requests for the resources;
activate the transmitter during first periods of time corresponding to the intervals at which the resources are available to the computing device to transmit the one or more of the voice packets;
deactivate the transmitter during second periods of time corresponding to when the resources are not available to the computing device to transmit the one or more of the voice packets;
obtain one or more non-voice data packets for transmission to the network;
determine whether a buffer occupancy of the computing device is below a buffer occupancy threshold;
in response to determining that the buffer occupancy of the computing device is at or above the buffer occupancy threshold, activating the transmitter and causing at least one of the voice packets and at least one of the non-voice data packets to be transmitted during the active time of the transmitter; and
in response to determining that the buffer occupancy of the computing device is below the buffer occupancy threshold, cause at least one of the voice packets and at least one of the non-voice data packets to be transmitted during a period of time corresponding to an interval at which the resources are available to the computing device to transmit the one or more voice packets,
wherein the buffer occupancy is calculated dynamically based on at least one of a length of a DTX cycle of the transmitter of the computing device, data traffic type corresponding to the non-voice data packets, quality of service metrics corresponding to the non-voice data packets, a resource type of the non-voice data packets, a priority corresponding to the non-voice data packets, a packet delay budget corresponding to the non-voice data packets, a packet error loss rate corresponding to the non-voice data packets, a data throttling rate, or radio conditions of the computing device.

2. The computing device of claim 1, wherein the instructions when executed to cause the at least one of the voice packets and the at least one of the non-voice data packets to be transmitted includes causing the computing device to:
send to the network, via the transmitter, a second request for second resources to transmit the at least one of the non-voice data packets, the second request indicating that the at least one of the non-voice data packets is to be scheduled for transmission during the period of time corresponding to the interval at which the resources are available to the computing device to transmit the one or more voice packets;
receive from the network, via the receiver, a second allocation of the second resources to transmit the at least one of non-voice data packets during the period of time corresponding to the interval; and
transmit to the network, via the transmitter, the at least one of the voice packets, using the resources, and the at least one of the non-voice data packets, using the second resources, during the period of time corresponding to the interval.

3. The computing device of claim 1, wherein the instructions when executed to cause the at least one of the voice packets and the at least one of the non-voice data packets to be transmitted includes causing the computing device to:
send to the network, via the transmitter, a second request for second resources to transmit the at least one of the non-voice data packets;
receive from the network, via the receiver, a second allocation of the second resources to transmit the at least one of the non-voice data packets;
buffer the at least one of the non-voice data packets until a mutual period of time corresponding to the interval at which the resources are available to the computing device to transmit the one or more voice packets and when the second resources are available to the computing device to transmit the at least one of the non-voice data packets; and
transmit to the network, via the transmitter, the at least one of the voice packets, using the resources, and the at least one non-voice data packet, using the second resources, during the mutual period of time.

4. A computer-implemented method (700), comprising:
under the control of one or more computer systems configured with executable instructions,
obtaining (702) an allocation of resources for transmission of packets of a first type of data from a computing device to a network, the allocation indicating intervals at which the resources are available to the computing device to transmit one or more of the packets of the first type of data;
activating (704) a transmitter of the computing device during first periods of time corresponding to the intervals at which the resources are available to the computing device to transmit the one or more of the packets of the first type of data;
deactivating the transmitter during second periods of time corresponding to when the resources are not available to the computing device to transmit the one or more of the packets of the first type of data;
obtaining (706), at the computing device, one or more packets of a second type of data for transmission to the network;
determining a buffer occupancy threshold of the computing device, wherein determining the buffer occupancy threshold of the computing device includes determining at least one of a length of a DTX cycle of the transmitter of the computing device, data traffic type corresponding to the at least one packet of the second type of data, quality of service metrics corresponding to the at least one packet of the second type of data, a resource type of the at least one packet of the second type of data, a priority corresponding to the at least one data packet of the second type of data, a packet delay budget corresponding to the at least one data packet of the second type of data, a packet error loss rate corresponding to the at least one data packet of the second type of data, a data throttling rate, or radio conditions of the computing device;
in response to determining that the buffer occupancy of the computing device is at or above the buffer occupancy threshold, activating the transmitter and causing at least one packet of the first type of data and at least one packet of the second type of data to be transmitted from the computing device to the network during the active time of the transmitter; and
in response to determining that the buffer occupancy of the computing device is below the buffer occupancy threshold, causing at least one packet of the first type of data and at least one packet of the second type of data to be transmitted from the computing device to the network during a period of time corresponding to an interval at which the resources are available to the computing device to transmit the one or more packets of the first type of data.

5. The computer-implemented method of claim 4, wherein causing the at least one packet of the first type of data and the at least one packet of the second type of data to be transmitted includes:
sending to the network a second request for second resources to transmit the at least one packet of the second type of data, the second request indicating that the one packet of the second type of data is to be scheduled for transmission during the period of time corresponding to the interval at which the resources are available to the computing device to transmit the one or more packets of the first type of data;
receiving from the network a second allocation of the second resources to transmit the one packet of the second type of data during the period of time corresponding to the interval; and
transmitting to the network the at least one packet of the first type of data, using the resources, and the at least one packet of the second type of data, using the second resources, during the period of time corresponding to the interval.

6. The computer-implemented method of claim 5, wherein sending to the network the second request for the second resources includes sending at least one of a buffer status report or a scheduling request, the at least one of the buffer status report or the scheduling request indicating that the at least one packet of the second type of data should be scheduled for transmission during the period of time corresponding to the interval.

7. The computer-implemented method of claim 4, wherein causing the at least one packet of the first type of data and the at least one packet of the second type of data to be transmitted includes:
sending to the network a second request for second resources to transmit the at least one packet of the second type of data;
receiving from the network a second allocation of the second resources to transmit the at least one packet of the second type of data;
buffering the at least one packet of the second type of data until a mutual period of time corresponding to the interval at which the resources are available to the computing device to transmit the one or more packets of the first type of data and when the second resources are available to the computing device to transmit the at least one packet of the second type of data; and
transmitting the at least one packet of the first type of data, using the resources, and the at least one packet of the second type of data, using the second resources, during the mutual period of time.

8. The computer-implemented method of claim 4, wherein the at least one packet of the second type of data is transmitted using the resources.

9. A non-transitory computer-readable storage medium storing instructions, the instructions when executed by a processor causing one or more computer systems to:
provide an allocation of resources for transmission of packets of a first type of data from a computing device to a network, the allocation indicating intervals at which the resources are available to the computing device to transmit one or more of the packets of the first type of data;
cause a transmitter of the computing device to be activated during first periods of time corresponding to the intervals at which the resources are available to the computing device to transmit the one or more of the packets of the first type of data;
cause the transmitter to be deactivated during second periods of time corresponding to when the resources are not available to the computing device to transmit the one or more of the packets of the first type of data;
determine a buffer occupancy threshold of the computing device, wherein determining the buffer occupancy threshold of the computing device includes determining at least one of a length of a DTX cycle of the transmitter of the computing device, data traffic type corresponding to the at least one packet of the second type of data, quality of service metrics corresponding to the at least one packet of the second type of data, a resource type of the at least one packet of the second type of data, a priority corresponding to the at least one data packet of the second type of data, a packet delay budget corresponding to the at least one data packet of the second type of data, a packet error loss rate corresponding to the at least one data packet of the second type of data, a data throttling rate, or radio conditions of the computing device; and
in response to determining that the buffer occupancy of the computing device is below the buffer occupancy threshold, cause at least one packet of the first type of data and at least one packet of a second type of data to be transmitted from the computing device to the network during a period of time corresponding to an interval at which the resources are available to the computing device to transmit the one or more packets of the first type of data.

10. The non-transitory computer-readable storage medium of claim 9, wherein the instructions when executed further cause the computing device to:
provide a second allocation of second resources to transmit the at least one packet of the second type of data during the period of time corresponding to the interval.

## Patentansprüche

1. Rechenvorrichtung (800), die Folgendes umfasst:
einen Prozessor (802);
einen Empfänger;
einen Sender; und
einen Speicher (804), der Anweisungen enthält, die dann, wenn sie durch den Prozessor ausgeführt werden, bewirken, dass die Rechenvorrichtung Folgendes ausführt:
Senden an ein Netz über den Sender einer Anforderung von Betriebsmitteln, um Sprachpakete zu senden;
Empfangen von dem Netz über den Empfänger einer Zuteilung der Betriebsmittel, um die Sprachpakete zu senden, wobei die Zuteilung Intervalle angibt, bei denen die Betriebsmittel für die Rechenvorrichtung verfügbar sind, um eines oder mehrere der Sprachpakete ohne zusätzliche Anforderungen für die Betriebsmittel zu senden;
Aktivieren des Senders während erster Zeitperioden, die den Intervallen entsprechen, bei denen die Betriebsmittel für die Rechenvorrichtung verfügbar sind, um das eine oder die mehreren der Sprachpakete zu senden;
Deaktivieren des Senders während zweiter Zeitperioden, die dem entsprechen, wenn die Betriebsmittel für die Rechenvorrichtung nicht verfügbar sind, um das eine oder die mehreren der Sprachpakete zu senden;
Erhalten eines oder mehrerer Nichtsprachdaten-Pakete zum Senden an das Netz;
Bestimmen, ob eine Zwischenspeicherbelegung der Rechenvorrichtung unter einem Zwischenspeicherbelegungsschwellenwert liegt;
als Reaktion auf das Bestimmen, dass die Zwischenspeicherbelegung der Rechenvorrichtung bei oder über dem Zwischenspeicherbelegungsschwellenwert liegt, Aktivieren des Senders und Bewirken, dass mindestens eines der Sprachpakete und mindestens eines der Nichtsprachdaten-Pakete während der aktiven Zeit des Senders gesendet wird; und
als Reaktion auf das Bestimmen, dass die Zwischenspeicherbelegung der Rechenvorrichtung unter dem Zwischenspeicherbelegungsschwellenwert liegt, Bewirken, dass mindestens eines der Sprachpakete und mindestens eines der Nichtsprachdaten-Pakete während einer Zeitperiode gesendet werden, die einem Intervall entspricht, in dem die Betriebsmittel für die Rechenvorrichtung verfügbar sind, um das eine oder die mehreren Sprachpakete zu senden,
wobei die Zwischenspeicherbelegung zumindest anhand einer Länge eines DTX-Zyklus des Senders der Rechenvorrichtung und/oder eines Datenverkehrstyps, der den Nichtsprachdaten-Paketen entspricht, und/oder einer Qualität der Dienstmetriken, die den Nichtsprachdaten-Paketen entspricht, und/oder eines Betriebsmitteltyps der Nichtsprachdaten-Pakete und/oder einer Priorität, die den Nichtsprachdaten-Paketen entspricht, und/oder eines Paketverzögerungsbudgets, das den Nichtsprachdaten-Paketen entspricht, und/oder einer Paketfehlerverlustrate, die den Nichtsprachdaten-Paketen entspricht, und/oder einer Datendrosselrate und/oder der Funkbedingungen der Rechenvorrichtung dynamisch berechnet wird.

2. Rechenvorrichtung nach Anspruch 1, wobei die Anweisungen, dann, wenn sie ausgeführt werden, um zu bewirken, dass das mindestens eine der Sprachpakete und das mindestens eine der Nichtsprachdaten-Pakete gesendet werden, enthalten, zu bewirken, dass die Rechenvorrichtung:
an das Netz über den Sender eine zweite Anforderung für zweite Betriebsmittel, um das mindestens eine der Nichtsprachdaten-Pakete zu senden, sendet, wobei die zweite Anforderung angibt, dass das mindestens eine der Nichtsprachdaten-Pakete für eine Sendung während der Zeitperiode, die dem Intervall entspricht, bei dem die Betriebsmittel für die Rechenvorrichtung verfügbar sind, um das eine oder die mehreren Sprachpakete zu senden, einzuplanen ist;
von dem Netz über den Empfänger eine zweite Zuteilung der zweiten Betriebsmittel, um das mindestens eine der Nicht-Sprachdatenpakte während der Zeitperiode, die dem Intervall entspricht, zu senden, empfängt; und
an das Netz über den Sender das mindestens eine der Sprachpakete unter Verwendung der Betriebsmittel und das mindestens eine der Nichtsprachdaten-Pakete unter Verwendung der zweiten Betriebsmittel während der Zeitperiode, die dem Intervall entspricht, sendet.

3. Rechenvorrichtung nach Anspruch 1, wobei die Anweisungen dann, wenn sie ausgeführt werden, um zu bewirken, dass das mindestens eine der Sprachpakete und das mindestens eine der Nichtsprachdaten-Pakete gesendet werden, enthalten, zu bewirken, dass die Rechenvorrichtung:
an das Netz über den Sender eine zweite Anforderung für zweite Betriebsmittel, um das mindestens eine der Nichtsprachdaten-Pakete zu senden, sendet;
von dem Netz über den Empfänger eine zweite Zuteilung der zweiten Betriebsmittel, um das mindestens eine der Nicht-Sprachdatenpakte zu senden, empfängt;
das mindestens eine der Nichtsprachdaten-Pakete bis zu einer gemeinsamen Zeitperiode, die dem Intervall entspricht, bei dem die Betriebsmittel für die Rechenvorrichtung verfügbar sind, um das eine oder die mehreren Sprachpakete zu senden, und wenn die zweiten Betriebsmittel für die Rechenvorrichtung, um das mindestens eine der Nichtsprachdaten-Pakete zu senden, verfügbar sind, zwischenspeichert; und
an das Netz über den Sender das mindestens eine der Sprachpakete unter Verwendung der Betriebsmittel und das mindestens eine Nichtsprachdaten-Paket unter Verwendung der zweiten Betriebsmittel während der gemeinsamen Zeitperiode sendet.

4. Computerimplementiertes Verfahren (700), das Folgendes umfasst:
unter der Steuerung eines oder mehrerer Computersysteme, die mit ausführbaren Anweisungen konfiguriert sind,
Erhalten (702) einer Zuteilung von Betriebsmitteln für das Senden von Paketen eines ersten Datentyps von einer Rechenvorrichtung an ein Netz, wobei die Zuteilung Intervalle angibt, bei denen die Betriebsmittel für die Rechenvorrichtung verfügbar sind, um eines oder mehrere der Pakete des ersten Datentyps zu senden;
Aktivieren (704) eines Senders der Rechenvorrichtung während erster Zeitperioden, die den Intervallen entsprechen, bei denen die Betriebsmittel für die Rechenvorrichtung verfügbar sind, um das eine oder die mehreren der Pakete des ersten Datentyps zu senden;
Deaktivieren des Senders während zweiter Zeitperioden, die dem entsprechen, wenn die Betriebsmittel für die Rechenvorrichtung nicht verfügbar sind, um das eine oder die mehreren der Pakete des ersten Datentyps zu senden;
Erhalten (706) an der Rechenvorrichtung eines oder mehrerer Pakete eines zweiten Datentyps für das Senden an das Netz;
Bestimmen eines Zwischenspeicherbelegungsschwellenwerts der Rechenvorrichtung, wobei das Bestimmen des Zwischenspeicherbelegungsschwellenwerts der Rechenvorrichtung enthält, eine Länge eines DTX-Zyklus des Senders der Rechenvorrichtung und/oder einen Datenverkehrstyp, der dem mindestens einen Paket des zweiten Datentyps entspricht, und/oder die Qualität der Dienstmetriken, die dem mindestens einen Paket des zweiten Datentyps entsprechen, und/oder einen Betriebsmitteltyp des mindestens einen Pakets des zweiten Datentyps und/oder eine Priorität, die dem mindestens einen Datenpaket des zweiten Datentyps entspricht, und/oder ein Paketverzögerungsbudget, das dem mindestens einen Datenpaket des zweiten Datentyps entspricht, und/oder eine Paketfehlerverlustrate, die dem mindestens einen Datenpaket des zweiten Datentyps entspricht, und/oder eine Datendrosselrate und/oder Funkbedingungen der Rechenvorrichtung zu bestimmen;
als Reaktion auf das Bestimmen, dass die Zwischenspeicherbelegung der Rechenvorrichtung bei oder über dem Zwischenspeicherbelegungsschwellenwert liegt, Aktivieren des Senders und Bewirken, dass mindestens ein Paket des ersten Datentyps und mindestens ein Paket des zweiten Datentyps während der aktiven Zeit des Senders von der Rechenvorrichtung an das Netz gesendet werden; und
als Reaktion auf das Bestimmen, dass die Zwischenspeicherbelegung der Rechenvorrichtung unter dem Zwischenspeicherbelegungsschwellenwert liegt, Bewirken, dass mindestens ein Paket des ersten Datentyps und mindestens ein Paket des zweiten Datentyps während einer Zeitperiode, die einem Intervall entspricht, bei dem die Betriebsmittel für die Rechenvorrichtung verfügbar sind, um das eine oder die mehreren Pakete des ersten Datentyps zu senden, von der Rechenvorrichtung an das Netz gesendet wird.

5. Computerimplementiertes Verfahren nach Anspruch 4, wobei das Bewirken, dass das mindestens eine Paket des ersten Datentyps und das mindestens eine Paket des zweiten Datentyps gesendet werden, Folgendes enthält:
Senden an das Netz einer zweiten Anforderung für zweite Betriebsmittel, um das mindestens eine Paket des zweiten Datentyps zu senden, wobei die zweite Anforderung angibt, dass das eine Paket des zweiten Datentyps für ein Senden während der Zeitperiode, die dem Intervall entspricht, bei dem die Betriebsmittel für die Rechenvorrichtung verfügbar sind, um das eine oder die mehreren Pakete des ersten Datentyps zu senden, einzuplanen ist;
Empfangen von dem Netz einer zweiten Zuteilung der zweiten Betriebsmittel, um das eine Paket des zweiten Datentyps während der Zeitperiode, die dem Intervall entspricht, zu senden; und
Senden an das Netz des mindestens einen Pakets des ersten Datentyps unter Verwendung der Betriebsmittel und des mindestens einen Pakets des zweiten Datentyps unter Verwendung der zweiten Betriebsmittel während der Zeitperiode, die dem Intervall entspricht.

6. Computerimplementiertes Verfahren nach Anspruch 5, wobei das Senden an das Netz der zweiten Anforderung für die zweiten Betriebsmittel enthält, einen Zwischenspeicherstatusbericht und/oder eine Planungsanforderung zu senden, wobei der Zwischenspeicherstatusbericht und/oder die Planungsanforderung angeben, dass das mindestens eine Paket des zweiten Typs von Daten für ein Senden während der Zeitperiode, die dem Intervall entspricht, eingeplant werden sollte.

7. Computerimplementiertes Verfahren nach Anspruch 4, wobei das Bewirken, dass das mindestens eine Paket des ersten Datentyps und das mindestens eine Paket des zweiten Datentyps gesendet werden, enthält:
Senden an das Netz einer zweiten Anforderung für zweite Betriebsmittel, um das mindestens eine Paket des zweiten Datentyps zu senden;
Empfangen von dem Netz einer zweiten Zuteilung der zweiten Betriebsmittel, um das mindestens eine Paket des zweiten Datentyps zu senden;
Zwischenspeichern des mindestens einen Pakets des zweiten Datentyps bis zu einer gemeinsamen Zeitperiode, die dem Intervall entspricht, bei dem die Betriebsmittel für die Rechenvorrichtung verfügbar sind, um das eine oder die mehreren Pakete des ersten Datentyps zu senden, und wenn die zweiten Betriebsmittel für die Rechenvorrichtung verfügbar sind, um das mindestens eine Paket des zweiten Datentyps zu senden; und
Senden des mindestens einen Pakets des ersten Datentyps unter Verwendung der Betriebsmittel und des mindestens einen Pakets des zweiten Datentyps unter Verwendung der zweiten Betriebsmittel während der gemeinsamen Zeitperiode.

8. Computerimplementiertes Verfahren nach Anspruch 4, wobei das mindestens eine Paket des zweiten Datentyps unter Verwendung der Betriebsmittel gesendet wird.

9. Nicht transitorisches computerlesbares Speichermedium, das Anweisungen speichert, wobei die Anweisungen dann, wenn sie durch einen Prozessor ausgeführt werden, bewirken, dass ein oder mehrere Computersysteme:
eine Zuteilung von Betriebsmitteln für ein Senden von Paketen eines ersten Datentyps von einer Rechenvorrichtung an ein Netz liefern, wobei die Zuteilung Intervalle angibt, bei denen die Betriebsmittel für die Rechenvorrichtung verfügbar sind, um eines oder mehrere der Pakete des ersten Datentyps zu senden;
bewirken, dass ein Sender der Rechenvorrichtung während erster Zeitperioden, die den Intervallen entsprechen, bei denen die Betriebsmittel für die Rechenvorrichtung verfügbar sind, um das eine oder die mehreren der Pakete des ersten Datentyps zu senden, aktiviert wird;
bewirken, dass der Sender während zweiter Zeitperioden, die dem entsprechen, wenn die Betriebsmittel für die Rechenvorrichtung nicht verfügbar sind, um das eine oder die mehreren Pakete des ersten Datentyps zu senden, deaktiviert wird;
einen Zwischenspeicherbelegungsschwellenwert der Rechenvorrichtung bestimmen, wobei das Bestimmen des Zwischenspeicherbelegungsschwellenwerts der Rechenvorrichtung enthält, eine Länge eines DTX-Zyklus des Senders der Rechenvorrichtung und/oder einen Datenverkehrstyp, der dem mindestens einen Paket des zweiten Datentyps entspricht, und/oder die Qualität der Dienstmetriken, die dem mindestens einen Paket des zweiten Datentyps entsprechen, und/oder einen Betriebsmitteltyp des mindestens einen Pakets des zweiten Datentyps und/oder eine Priorität, die dem mindestens einen Paket des zweiten Datentyps entspricht, und/oder ein Paketverzögerungsbudget, das dem mindestens einen Paket des zweiten Datentyps entspricht, und/oder eine Paketfehlerverlustrate, die dem mindestens einen Datenpaket des zweiten Datentyps entspricht, und/oder eine Datendrosselrate und/oder Funkbedingungen der Rechenvorrichtung zu bestimmen; und
als Reaktion auf das Bestimmen, dass die Zwischenspeicherbelegung der Rechenvorrichtung unter dem Zwischenspeicherbelegungsschwellenwert liegt, bewirken, dass mindestens ein Paket des ersten Datentyps und mindestens ein Paket des zweiten Datentyps während einer Zeitperiode, die einem Intervall entspricht, bei dem die Betriebsmittel für die Rechenvorrichtung verfügbar sind, um das eine oder die mehreren Pakete des ersten Datentyps zu senden, von der Rechenvorrichtung an das Netz gesendet werden.

10. Nicht transitorisches computerlesbares Speichermedium nach Anspruch 9, wobei die Anweisungen dann, wenn sie ausgeführt werden, ferner bewirken, dass die Rechenvorrichtung:
eine zweite Zuteilung von zweiten Betriebsmitteln, um das mindestens eine Paket des zweiten Datentyps während der Zeitperiode, die dem Intervall entspricht, zu senden, liefert.

## Revendications

1. Dispositif informatique (800), comprenant :
un processeur (802) ;
un récepteur ;
un émetteur ; et
une mémoire (804) comprenant des instructions qui, lorsqu'elles sont exécutées par le processeur, amènent le dispositif informatique à exécuter les étapes suivantes :
envoyer à un réseau, par l'intermédiaire de l'émetteur, une demande de ressources pour transmettre des paquets vocaux ;
recevoir du réseau, par l'intermédiaire du récepteur, une allocation des ressources pour transmettre les paquets vocaux, l'allocation indiquant les intervalles auxquels les ressources sont disponibles pour le dispositif informatique pour transmettre un ou plusieurs des paquets vocaux sans nécessiter de demandes supplémentaires de ressources ;
activer l'émetteur pendant les premières périodes de temps correspondant aux intervalles auxquels les ressources sont disponibles pour le dispositif informatique pour transmettre les un ou plusieurs paquets des paquets vocaux ;
désactiver l'émetteur pendant les secondes périodes de temps correspondant aux périodes pendant lesquelles les ressources ne sont pas disponibles pour le dispositif informatique pour transmettre les un ou plusieurs paquets des paquets vocaux ;
obtenir un ou plusieurs paquets de données non vocales pour une transmission au réseau ;
déterminer si l'occupation d'une mémoire tampon du dispositif informatique est inférieure à un seuil d'occupation de mémoire tampon ;
en réponse à la détermination que l'occupation de la mémoire tampon du dispositif informatique est égale ou supérieure au seuil d'occupation de la mémoire tampon, activer l'émetteur et amener au moins un des paquets vocaux et au moins un des paquets de données non vocales à être transmis au cours du temps actif de l'émetteur ; et
en réponse à la détermination que l'occupation de la mémoire tampon du dispositif informatique est inférieure au seuil d'occupation de la mémoire tampon, amener au moins l'un des paquets vocaux et au moins l'un des paquets de données non vocales à être transmis au cours d'une période de temps correspondant à un intervalle pendant lequel les ressources sont disponibles pour le dispositif informatique pour transmettre les un ou plusieurs paquets vocaux,
où l'occupation du tampon est calculée dynamiquement sur la base d'au moins un élément parmi une longueur d'un cycle DTX de l'émetteur du dispositif informatique, le type de trafic de données correspondant aux paquets de données non vocales, des mesures de qualité de service correspondant aux paquets de données non vocales, un type de ressources des paquets de données non vocales, une priorité correspondant aux paquets de données non vocales, un budget de retard de paquets correspondant aux paquets de données non vocales, un taux de perte d'erreurs de paquets correspondant aux paquets de données non vocales, un taux d'étranglement de données ou des conditions radio du dispositif informatique.

2. Dispositif informatique selon la revendication 1, dans lequel les instructions, lorsqu'elles sont exécutées pour amener que l'au moins un des paquets vocaux et l'au moins un des paquets de données non vocaux soient transmis, comprennent d'amener le dispositif informatique à exécuter les étapes suivantes :
envoyer au réseau, par l'intermédiaire de l'émetteur, une seconde demande de secondes ressources pour transmettre l'au moins un paquet des paquets de données non vocales, la seconde demande indiquant que l'au moins un paquet des paquets de données non vocales doit être programmé pour une transmission au cours de la période de temps correspondant à l'intervalle pendant lequel les ressources sont disponibles pour le dispositif informatique pour transmettre les un ou plusieurs paquets vocaux ;
recevoir du réseau, par l'intermédiaire du récepteur, une seconde allocation des secondes ressources pour transmettre l'au moins un paquet des paquets de données non vocales au cours de la période de temps correspondant à l'intervalle ; et
transmettre au réseau, par l'intermédiaire de l'émetteur, l'au moins un paquet des paquets vocaux, au moyen des ressources, et l'au moins un paquet des paquets de données non vocales, au moyen des secondes ressources, au cours de la période de temps correspondant à l'intervalle.

3. Dispositif informatique selon la revendication 1, dans lequel les instructions, lorsqu'elles sont exécutées pour amener la transmission de l'au moins un paquet des paquets vocaux et de l'au moins un paquet des paquets de données non vocales, comprennent d'amener le dispositif informatique à exécuter les étapes suivantes :
envoyer au réseau, par l'intermédiaire de l'émetteur, une seconde demande de secondes ressources pour transmettre l'au moins un paquet des paquets de données non vocales ;
recevoir du réseau, par l'intermédiaire du récepteur, une seconde allocation des secondes ressources pour transmettre l'au moins un paquet des paquets de données non vocales ;
placer en mémoire tampon l'au moins un paquet des paquets de données non vocales jusqu'à une période de temps mutuelle correspondant à l'intervalle de temps pendant lequel les ressources sont disponibles pour le dispositif informatique pour transmettre les un ou plusieurs paquets vocaux et lorsque les secondes ressources sont disponibles pour le dispositif informatique pour transmettre l'au moins un paquet des paquets de données non vocales ; et
transmettre au réseau, par l'intermédiaire de l'émetteur, l'au moins un paquet des paquets vocaux, au moyen des ressources, et l'au moins un paquet des paquets de données non vocales, au moyen des secondes ressources, au cours de la période de temps mutuelle.

4. Procédé mis en oeuvre par ordinateur (700), comprenant les étapes suivantes :
sous le contrôle d'un ou plusieurs systèmes informatiques configurés avec des instructions exécutables,
obtenir (702) une allocation de ressources pour la transmission de paquets d'un premier type de données depuis un dispositif informatique vers un réseau, l'allocation indiquant les intervalles pendant lesquels les ressources sont disponibles pour le dispositif informatique pour transmettre un ou plusieurs paquets des paquets du premier type de données ;
activer (704) un émetteur du dispositif informatique au cours des premières périodes de temps correspondant aux intervalles pendant lesquels les ressources sont disponibles pour le dispositif informatique pour transmettre les un ou plusieurs paquets des paquets du premier type de données ;
désactiver l'émetteur au cours de secondes périodes de temps correspondant aux moments pendant lesquels les ressources ne sont pas disponibles pour le dispositif informatique pour transmettre les un ou plusieurs paquets des paquets du premier type de données ;
obtenir (706), au niveau du dispositif informatique, un ou plusieurs paquets d'un second type de données pour une transmission au réseau ;
déterminer un seuil d'occupation de mémoire tampon du dispositif informatique, où la détermination du seuil d'occupation de la mémoire tampon du dispositif informatique comprend de déterminer au moins un élément parmi la longueur d'un cycle DTX de l'émetteur du dispositif informatique, le type de trafic de données correspondant à l'au moins un paquet du second type de données, des mesures de qualité de service correspondant à l'au moins un paquet du second type de données, un type de ressources de l'au moins un paquet du second type de données, une priorité correspondant à l'au moins un paquet de données du second type de données, un budget de retard de paquets correspondant à l'au moins un paquet de données du second type de données, un taux de perte d'erreurs de paquets correspondant à l'au moins un paquet de données du second type de données, un taux d'étranglement de données ou des conditions radio du dispositif informatique ;
en réponse à la détermination que l'occupation de la mémoire tampon du dispositif informatique est égale ou supérieure au seuil d'occupation de la mémoire tampon, activer l'émetteur et amener qu'au moins un paquet du premier type de données et au moins un paquet du second type de données soient transmis du dispositif informatique au réseau au cours du temps actif de l'émetteur ; et
en réponse à la détermination que l'occupation de la mémoire tampon du dispositif informatique est inférieure au seuil d'occupation de la mémoire tampon, amener l'au moins un paquet du premier type de données et l'au moins un paquet du second type de données à être transmis du dispositif informatique au réseau au cours d'une période de temps correspondant à un intervalle pendant lequel les ressources sont disponibles pour le dispositif informatique pour transmettre les un ou plusieurs paquets du premier type de données.

5. Procédé mis en oeuvre par ordinateur selon la revendication 4, dans lequel amener l'au moins un paquet du premier type de données et l'au moins un paquet du second type de données à être transmis comprend les étapes suivantes :
envoyer au réseau une seconde demande de secondes ressources pour transmettre l'au moins un paquet du second type de données, la seconde demande indiquant que le paquet du second type de données doit être planifié pour une transmission au cours de la période de temps correspondant à l'intervalle pendant lequel les ressources sont disponibles pour le dispositif informatique pour transmettre les un ou plusieurs paquets du premier type de données ;
recevoir du réseau une seconde allocation des secondes ressources pour transmettre le paquet du second type de données au cours de la période de temps correspondant à l'intervalle ; et
transmettre au réseau l'au moins un paquet du premier type de données au moyen des ressources, et l'au moins un paquet du second type de données au moyen des secondes ressources, au cours de la période de temps correspondant à l'intervalle.

6. Procédé mis en oeuvre par ordinateur selon la revendication 5, dans lequel l'envoi au réseau de la seconde demande pour les secondes ressources comprend d'envoyer au moins un élément parmi un rapport d'état de la mémoire tampon et une demande de planification, l'au moins un rapport d'état de la mémoire tampon ou la demande de planification indiquant que l'au moins un paquet du second type de données doit être planifié pour une transmission au cours de la période de temps correspondant à l'intervalle.

7. Procédé mis en oeuvre par ordinateur selon la revendication 4, dans lequel amener l'au moins un paquet du premier type de données et l'au moins un paquet du second type de données à être transmis comprend les étapes suivantes :
envoyer au réseau d'une seconde demande de secondes ressources pour transmettre l'au moins un paquet du second type de données ;
recevoir du réseau une seconde allocation des secondes ressources pour transmettre l'au moins un paquet du second type de données ;
placer en mémoire tampon l'au moins un paquet du second type de données jusqu'à une période de temps mutuelle correspondant à l'intervalle pendant lequel les ressources sont disponibles pour le dispositif informatique pour transmettre les un ou plusieurs paquets du premier type de données et lorsque les secondes ressources sont disponibles pour le dispositif informatique pour transmettre l'au moins un paquet du second type de données ; et
transmettre l'au moins un paquet du premier type de données, au moyen des ressources, et l'au moins un paquet du second type de données au moyen des secondes ressources au cours de la période de temps mutuelle.

8. Procédé mis en oeuvre par ordinateur selon la revendication 4, dans lequel l'au moins un paquet du second type de données est transmis au moyen des ressources.

9. Un support de stockage non transitoire lisible par ordinateur stockant des instructions, les instructions, lorsqu'elles sont exécutées par un processeur, amenant un ou plusieurs systèmes informatiques à :
fournir une allocation de ressources pour la transmission de paquets d'un premier type de données depuis un dispositif informatique vers un réseau, l'allocation indiquant les intervalles pendant lesquels les ressources sont disponibles pour le dispositif informatique pour transmettre un ou plusieurs paquets des paquets du premier type de données ;
amener un émetteur du dispositif informatique à être activé au cours des premières périodes de temps correspondant aux intervalles pendant lesquels les ressources sont disponibles pour le dispositif informatique pour transmettre les un ou plusieurs paquets des paquets du premier type de données ;
amener l'émetteur à être désactivé au cours des secondes périodes de temps correspondant au moment pendant lequel les ressources ne sont pas disponibles pour le dispositif informatique pour transmettre les un ou plusieurs paquets des paquets du premier type de données ;
déterminer un seuil d'occupation de la mémoire tampon du dispositif informatique, où la détermination du seuil d'occupation de la mémoire tampon du dispositif informatique comprend de déterminer au moins un élément parmi une longueur d'un cycle DTX de l'émetteur du dispositif informatique, le type de trafic de données correspondant à l'au moins un paquet du second type de données, des mesures de qualité de service correspondant à l'au moins un paquet du second type de données, un type de ressource de l'au moins un paquet du second type de données, une priorité correspondant à l'au moins un paquet de données du second type de données, un budget de retard de paquets correspondant à l'au moins un paquet de données du second type de données, un taux de perte d'erreurs de paquets correspondant à l'au moins un paquet de données du second type de données, un taux d'étranglement de données ou des conditions radio du dispositif informatique ; et
en réponse à la détermination que l'occupation de la mémoire tampon du dispositif informatique est inférieure au seuil d'occupation de la mémoire tampon, amener l'au moins un paquet du premier type de données et l'au moins un paquet d'un second type de données à être transmis du dispositif informatique au réseau au cours d'une période de temps correspondant à un intervalle pendant lequel les ressources sont disponibles pour le dispositif informatique pour transmettre les un ou plusieurs paquets du premier type de données.

10. Support de stockage non transitoire lisible par ordinateur selon la revendication 9, dans lequel les instructions, lorsqu'elles sont exécutées, amènent le dispositif informatique à :
pourvoir une seconde allocation de secondes ressources pour transmettre l'au moins un paquet du second type de données au cours de la période de temps correspondant à l'intervalle.
